# EUROPEAN PATENT APPLICATION

(11) **EP 4 311 658 A1**
(43) Date of publication of application: **31.01.2024**
(21) Application number: 23187482.7
(22) Date of filing: 25.07.2023
(51) Int. Cl.: B29C 64/129, B29C 64/35, B33Y 10/00, B33Y 30/00, B22F 10/00, B22F 10/12, B29C 64/00

(54) **SYSTEMS AND METHODS FOR ADDITIVE MANUFACTURING**

(30) Priority: 28.07.2022 US 202263393020 P; 28.06.2023 US 202318343317
(71) Applicant: General Electric Company, Schenectady, NY 12345 (US)
(72) Inventor: Yang, Xi, West Chester, 45069 (US); Dubelman, Meredith Elissa, West Chester, 45069 (US); Barnhill, Christopher David, West Chester, 45069 (US); Steele, William Joseph, West Chester, 45069 (US); Thompson, Mary Kathryn, West Chester, 45069 (US)
(74) Representative: Hafner & Kohl PartmbB

(57) **Abstract**

An additive manufacturing apparatus (10) is provided herein that includes a resin support (26) configured to support a resin. A support plate (14) includes a window (16). A stage (18) is configured to hold one or more cured layers of the resin to form a component. Each cured layer is formed with the stage in a respective cure position. A radiant energy device (20) is positioned on an opposite side of the resin support from the stage and is operable to generate and project radiant energy in a patterned image through the window. An actuator (50) is operably coupled with the stage and is configured to move the stage in a Z-axis direction to place the stage in a removal position. The component contacts one of the resin support or the resin supported by the resin support in the removal position.

## Description

### CROSS-REFERENCE TO RELATED APPLICATION

This application claims priority to U.S. Provisional Application No. 63/393,020, entitled "SYSTEMS AND METHODS FOR ADDITIVE MANUFACTURING," filed on July 28, 2022. The entire contents of the above-referenced application is hereby incorporated by reference in its entirety for all purposes.

### FIELD

The present subject matter relates generally to an additive manufacturing apparatus.

### BACKGROUND

Additive manufacturing is a process in which material is built up layer-by-layer to form a component. Stereolithography (SLA) is a type of additive manufacturing process, which employs a tank of radiant-energy curable photopolymer "resin" and a curing energy source such as a laser. Similarly, Digital Light Processing (DLP) three-dimensional (3D) printing employs a two-dimensional image projector to build components one layer at a time. For each layer, the energy source draws or flashes a radiation image of the cross section of the component onto the surface of the resin. Exposure to the radiation cures and solidifies the pattern in the resin and joins it to a previously cured layer.

In some instances, additive manufacturing may be accomplished through a "tape casting" process. In this process, a resin is deposited onto a flexible radiotransparent resin support, such as a tape or foil, that is fed out from a supply reel to a build zone. Radiant energy is produced from a radiant energy device and directed through a window to cure the resin to a component that is supported by a stage in the build zone. Once the curing of the first layer is complete, the stage and the resin support are separated from one another. The resin support is then advanced and fresh resin is provided to the build zone. In turn, the first layer of the cured resin is placed onto the fresh resin and cured through the energy device to form an additional layer of the component. Subsequent layers are added to each previous layer until the component is completed. However, in some instances, it may be beneficial to remove residual resin from the component prior to forming an additional layer of the component.

### BRIEF DESCRIPTION OF THE DRAWINGS

A full and enabling disclosure of the present disclosure, including the best mode thereof, directed to one of ordinary skill in the art, is set forth in the specification, which makes reference to the appended figures.
FIG. 1A is a schematic side view of an additive manufacturing apparatus in accordance with various aspects of the present disclosure;
FIG. 1B is a schematic side view of an additive manufacturing apparatus in accordance with various aspects of the present disclosure;
FIG. 2 is a front perspective view of the additive manufacturing apparatus in accordance with various aspects of the present disclosure;
FIG. 3 is a method of operating the additive manufacturing apparatus in accordance with various aspects of the present disclosure;
FIGS. 4-11 illustrate schematic views of the additive manufacturing apparatus during the method of operating the additive manufacturing apparatus described in FIG. 3 in accordance with various aspects of the present disclosure;
FIG. 12 is a method of operating the additive manufacturing apparatus in accordance with various aspects of the present disclosure;
FIGS. 13-15 illustrate schematic views of the additive manufacturing apparatus during the method of operating the additive manufacturing apparatus described in FIG. 12 in accordance with various aspects of the present disclosure;
FIG. 16 is a method of operating the additive manufacturing apparatus in accordance with various aspects of the present disclosure;
FIGS. 17-19 illustrate schematic views of the additive manufacturing apparatus during the method of operating the additive manufacturing apparatus described in FIG. 16 in accordance with various aspects of the present disclosure;
FIG. 20 is a method of operating the additive manufacturing apparatus in accordance with various aspects of the present disclosure;
FIGS. 21-24 illustrate schematic views of the additive manufacturing apparatus during the method of operating the additive manufacturing apparatus described in FIG. 20 in accordance with various aspects of the present disclosure;
FIG. 25 is a method of operating the additive manufacturing apparatus in accordance with various aspects of the present disclosure;
FIGS. 26-29 illustrate schematic views of the additive manufacturing apparatus during the method of operating the additive manufacturing apparatus described in FIG. 25 in accordance with various aspects of the present disclosure;
FIG. 30 is a method of operating the additive manufacturing apparatus in accordance with various aspects of the present disclosure;
FIGS. 31-33 illustrate schematic views of the additive manufacturing apparatus during the method of operating the additive manufacturing apparatus described in FIG. 30 in accordance with various aspects of the present disclosure;
FIG. 34 is a method of operating the additive manufacturing apparatus in accordance with various aspects of the present disclosure;
FIGS. 35-39 illustrate schematic views of the additive manufacturing apparatus during the method of operating the additive manufacturing apparatus described in FIG. 34 in accordance with various aspects of the present disclosure; and
FIG. 40 depicts an exemplary computing system for an additive manufacturing apparatus in accordance with various aspects of the present disclosure.

Repeat use of reference characters in the present specification and drawings is intended to represent the same or analogous features or elements of the present disclosure.

### DETAILED DESCRIPTION

Reference will now be made in detail to present embodiments of the disclosure, one or more examples of which are illustrated in the accompanying drawings. The detailed description uses numerical and letter designations to refer to features in the drawings. Like or similar designations in the drawings and description have been used to refer to like or similar parts of the disclosure.

As used herein, the terms "first," "second," and "third" may be used interchangeably to distinguish one component from another and are not intended to signify a location or importance of the individual components. The terms "coupled," "fixed," "attached to," and the like refer to both direct coupling, fixing, or attaching, as well as indirect coupling, fixing, or attaching through one or more intermediate components or features, unless otherwise specified herein. The terms "upstream" and "downstream" refer to the relative direction with respect to a resin support movement along the manufacturing apparatus. For example, "upstream" refers to the direction from which the resin support moves, and "downstream" refers to the direction to which the resin support moves. The term "selectively" refers to a component's ability to operate in various states (e.g., an ON state and an OFF state) based on manual and/or automatic control of the component.

The singular forms "a," "an," and "the" include plural references unless the context clearly dictates otherwise.

Approximating language, as used herein throughout the specification and claims, is applied to modify any quantitative representation that could permissibly vary without resulting in a change in the basic function to which it is related. Accordingly, a value modified by a term or terms, such as "about," "approximately," "generally," and "substantially," is not to be limited to the precise value specified. In at least some instances, the approximating language may correspond to the precision of an instrument for measuring the value, or the precision of the methods or apparatus for constructing or manufacturing the components and/or systems. For example, the approximating language may refer to being within a ten percent margin.

Moreover, the technology of the present application will be described in relation to exemplary embodiments. The word "exemplary" is used herein to mean "serving as an example, instance, or illustration." Any embodiment described herein as "exemplary" is not necessarily to be construed as preferred or advantageous over other embodiments. Additionally, unless specifically identified otherwise, all embodiments described herein should be considered exemplary.

Here and throughout the specification and claims, range limitations are combined and interchanged, such ranges are identified and include all the sub-ranges contained therein unless context or language indicates otherwise. For example, all ranges disclosed herein are inclusive of the endpoints, and the endpoints are independently combinable with each other.

As used herein, the term "and/or," when used in a list of two or more items, means that any one of the listed items can be employed by itself, or any combination of two or more of the listed items can be employed. For example, if a composition or assembly is described as containing components A, B, and/or C, the composition or assembly can contain A alone; B alone; C alone; A and B in combination; A and C in combination; B and C in combination; or A, B, and C in combination.

The present disclosure is generally directed to an additive manufacturing apparatus that implements various manufacturing processes such that successive layers of material(s) are provided on each other to "build-up," layer-by-layer, a three-dimensional component. The successive layers generally cure together to form a monolithic component which may have a variety of integral sub-components. Although additive manufacturing technology is described herein as enabling the fabrication of complex objects by building objects point-by-point, layer-by-layer, variations of the described additive manufacturing apparatus and technology are possible and within the scope of the present subject matter.

The additive manufacturing apparatus can include a support plate, a window supported by the support plate, and a stage moveable relative to the window. The additive manufacturing apparatus can further include a first resin and a second resin that are each deposited as layers having a desired thickness onto a resin support (such as a foil, tape, vat, plate, etc.) that is fed out from a supply reel or a pair of supply reels in an X-axis direction. In various instances, the first resin may be laterally offset from the second resin in a Y-axis direction.

A stage lowers onto the resin such that a working surface defined by one of a surface of the stage or a surface of the work in process component is positioned such that the working surface either is just touching the resin or compressing it between the resin support and the stage and defining a layer thickness. Radiant energy is used to cure the resin through the resin support. Once the curing of the first layer is complete, the stage is retracted, taking the cured material with the stage.

In some instances, residual resin remains on the component once the stage is retracted. The residual resin may be any resin that was inadvertently coupled with the component and not intended to be used to form a portion of the layer of the component. As such, the additive manufacturing apparatus can perform one or more removal operations to separate at least a portion of the residual resin from the component. Once completed, the component may have less residual resin thereon such that subsequent cleaning processes may not be needed. In some instances, the subsequent cleaning processes may use solutions that weaken or otherwise alter the structure of the component.

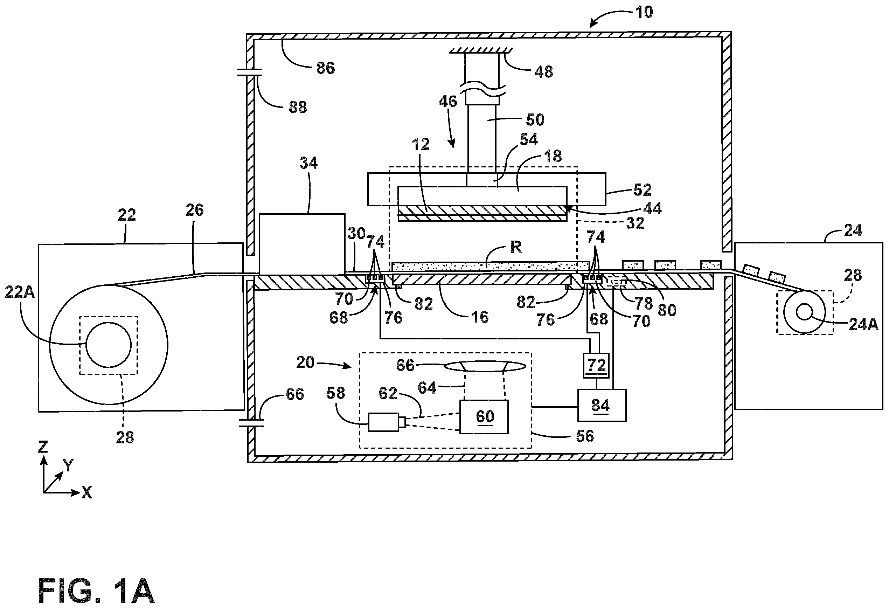

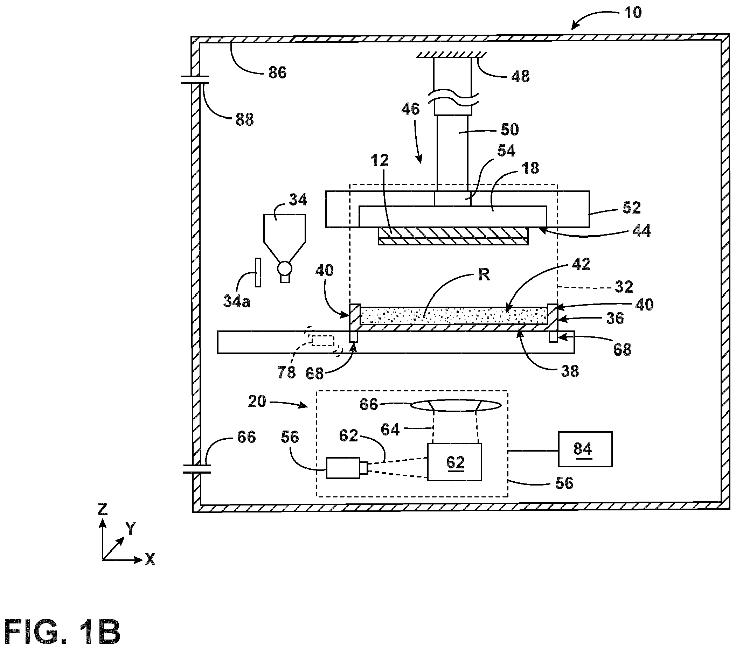

Referring to the drawings wherein identical reference numerals denote the similar elements throughout the various views, FIGS. 1A and 1B schematically illustrate an example of one type of suitable apparatus 10 for forming a component 12 created through one or more layers of at least one cured first, component resin R. The apparatus 10 can include one or more of a support plate 14, a window 16, a stage 18 that is movable relative to the window 16, and a radiant energy device 20, which, in combination, may be used to form any number (e.g., one or more) of additively manufactured components 12.

In the illustrated example of FIG. 1A, the apparatus 10 includes a feed module 22, which may include a first roller 22A, and a take-up module 24, which may include a second roller 24A, that are spaced-apart with a resin support 26 extending therebetween. A portion of the resin support 26 can be supported from underneath by the support plate 14. Suitable mechanical supports (frames, brackets, etc.) and/or alignment devices may be provided for the rollers 22A, 24A and the support plate 14. The first roller 22A and/or the second roller 24A can be configured to control the speed and direction of the resin support 26 such that the desired tension and speed is maintained in the resin support 26 through a drive system 28. By way of example and not limitation, the drive system 28 can be configured as individual motors associated with the first roller 22A and/or the second roller 24A. Moreover, various components, such as motors, actuators, feedback sensors, and/or controls can be provided for driving the rollers 22A, 24A in such a manner to maintain the resin support 26 tensioned between the aligned rollers 22A, 24A and to wind the resin support 26 from the first roller 22A to the second roller 24A.

In various embodiments, the window 16 is transparent and can be operably supported by the support plate 14. Further, the window 16 and the support plate 14 can be integrally formed such that one or more windows 16 are integrated within the support plate 14. Likewise, the resin support 26 is also transparent or includes portions that are transparent. As used herein, the terms "transparent" and "radiotransparent" refer to a material that allows at least a portion of radiant energy of a selected wavelength to pass through. For example, the radiant energy that passes through the window 16 and the resin support 26 can be in the ultraviolet spectrum, the infrared spectrum, the visible spectrum, or any other practicable radiant energy. Non-limiting examples of transparent materials include polymers, glass, and crystalline minerals, such as sapphire or quartz.

The resin support 26 extends between the feed module 22 and the take-up module 24 and defines a "build surface" 30, which is shown as being planar, but could alternatively be arcuate (depending on the shape of the support plate 14). In some instances, the build surface 30 may be defined by the resin support 26 and be positioned to face the stage 18 with the window 16 on an opposing side of the resin support 26 from the stage 18. For purposes of convenient description, the build surface 30 may be considered to be oriented parallel to an X-Y plane of the apparatus 10, and a direction perpendicular to the X-Y plane is denoted as a Z-axis direction (X, Y, and Z being three mutually perpendicular directions). As used herein, the X-axis refers to the machine direction along the length of the resin support 26. As used herein, the Y-axis refers to the transverse direction across the width of the resin support 26 and generally perpendicular to the machine direction. As used herein, the Z-axis refers to the stage direction that can be defined as the direction of movement of the stage 18 relative to the window 16.

The build surface 30 may be configured to be "non-stick," that is, resistant to adhesion of a cured first resin R. The non-stick properties may be embodied by a combination of variables such as the chemistry of the resin support 26, its surface finish, and/or applied coatings. For instance, a permanent or semi-permanent non-stick coating may be applied. One non-limiting example of a suitable coating is polytetrafluoroethylene ("PTFE"). In some examples, all or a portion of the build surface 30 may incorporate a controlled roughness or surface texture (e.g. protrusions, dimples, grooves, ridges, etc.) with nonstick properties. Additionally or alternatively, the resin support 26 may be made in whole or in part from an oxygen-permeable material.

For reference purposes, an area or volume immediately surrounding the location of the resin support 26 and the window 16 or transparent portion defined by the support plate 14 may be defined as a "build zone," labeled 32.

In some instances, a material depositor 34 may be positioned along the resin support 26. The material depositor 34 may be any device or combination of devices that is operable to apply a layer of one or more resins R on the resin support 26. The material depositor 34 may optionally include a device or combination of devices to define a height of the one or more resins R on the resin support 26 and/or to level the one or more resins R on the resin support 26. Nonlimiting examples of suitable material deposition devices include chutes, rollers, hoppers, pumps, spray nozzles, spray bars, or printheads (e.g. inkjets). In some examples, a doctor blade may be used to control the thickness of the one or more resins R applied to the resin support 26 as the resin support 26 passes the material depositor 34.

In the illustrated example of FIG. 1B, the resin support 26 may be in the form of a vat 36 that is configured to isolate debris that could contaminate the build from usable first resin R. The vat 36 may include a floor 38 and a perimeter wall 40. The perimeter wall 40 extends from the floor 38. Inner surfaces of the floor 38 and the perimeter wall 40 define a receptacle 42 for receiving the first resin R.

A drive system 28 (FIG. 1A) may be provided for moving the vat 36 relative to the stage 18 parallel to the X-direction between a build zone 32 and a position at least partially external to the build zone 32. However, it will be appreciated that, in other embodiments, the resin support 26 may be stationary without departing from the scope of the present disclosure.

In some instances, the resin support 26 may be positioned to accept a first resin R from a material depositor 34 to introduce a layer of first resin R into the resin support 26. The material depositor 34 may optionally include a device or combination of devices to define a height in the resin and/or to level the first resin R. Nonlimiting examples of suitable material deposition devices include chutes, hoppers, pumps, spray nozzles, spray bars, or printheads (e.g. inkjets).

Referring back to FIGS. 1A and 1B, the first resin R includes any radiant-energy curable material, which is capable of adhering or binding together the filler (if used) in the cured state. As used herein, the term "radiant-energy curable" refers to any material which solidifies or partially solidifies in response to the application of radiant energy of a particular frequency and energy level. For example, the first resin R may include a photopolymer resin containing photo-initiator compounds functioning to trigger a polymerization reaction, causing the first resin R to change from a liquid (or powdered) state to a solid state. Alternatively, the first resin R may include a material that contains a solvent that may be evaporated out by the application of radiant energy. The uncured first resin R may be provided in solid (e.g. granular) or liquid form, including a paste or slurry.

Furthermore, the first resin R can have a relatively high viscosity resin that will not "slump" or run off during the build process. The composition of the first resin R may be selected as desired to suit a particular application. Mixtures of different compositions may be used. The first resin R may be selected to have the ability to out-gas or burn off during further processing, such as a sintering process.

Additionally or alternatively, the first resin R may be selected to be a viscosity reducible composition. These compositions reduce in viscosity when a shear stress is applied or when they are heated. For example, the first resin R may be selected to be shear-thinning such that the first resin R exhibits reduced viscosity as an amount of stress applied to the first resin R increases. Additionally or alternatively, the first resin R may be selected to reduce in the viscosity as the first resin R is heated.

The first resin R may incorporate a filler. The filler may be pre-mixed with first resin R, then loaded into the material depositor 34. Alternatively, the filler may be mixed with the first resin R on the apparatus 10. The filler includes particles, which are conventionally defined as "a very small bit of matter." The filler may include any material that is chemically and physically compatible with the selected first resin R. The particles may be regular or irregular in shape, may be uniform or non-uniform in size, and may have variable aspect ratios. For example, the particles may take the form of powder, of small spheres or granules, or may be shaped like small rods or fibers.

The composition of the filler, including its chemistry and microstructure, may be selected as desired to suit a particular application. For example, the filler may be metallic, ceramic, polymeric, and/or organic. Other examples of potential fillers include diamond, silicon, and graphite. Mixtures of different compositions may be used. In some examples, the filler composition may be selected for its electrical or electromagnetic properties, e.g. it may specifically be an electrical insulator, a dielectric material, an electrical conductor, and/or magnetic.

The filler may be "fusible," meaning it is capable of consolidation into a mass upon application of sufficient energy. For example, fusibility is a characteristic of many available powders including but not limited to polymeric, ceramic, glass, and metallic. The proportion of filler to first resin R may be selected to suit a particular application. Generally, any amount of filler may be used so long as the combined material is capable of flowing and being leveled, and there is sufficient first resin R to hold together the particles of the filler in the cured state.

The stage 18 is a structure defining a planar surface 44, which is capable of being oriented parallel to the build surface 30 or the X-Y plane. Various devices may be provided for moving the stage 18 relative to the window 16. For example, as illustrated in FIGS. 1A and 1B, the movement may be provided through an actuator assembly 46 that may be coupled with a static support 48. In some embodiments, the actuator assembly 46 may include a first actuator 50 between the stage 18 and the static support 48 that allows for movement of the stage 18 in a first, vertical direction (e.g., along the Z-axis direction). The actuator assembly 46 may additionally or alternatively include a second actuator 52 between the stage 18 and the first actuator 50 and/or the static support 48 that allows for movement in the X-axis direction and/or the Y-axis direction. The actuator assembly 46 may include any device practicable of moving the stage 18 in any direction, such as ballscrew electric actuators, linear electric actuators, pneumatic cylinders, hydraulic cylinders, delta drives, belt systems, or any other practicable device.

The radiant energy device 20 may be configured as any device or combination of devices operable to generate and project radiant energy at the first resin R in a suitable pattern and with a suitable energy level and other operating characteristics to cure the first resin R during the build process. For example, as shown in FIGS. 1A and 1B, the radiant energy device 20 may include a projector 56, which may generally refer to any device operable to generate a radiant energy predetermined patterned image of suitable energy level and other operating characteristics to cure the first resin R. As used herein, the term "patterned image" refers to a projection of radiant energy comprising an array of one or more individual pixels. Non-limiting examples of patterned image devices include a DLP projector or another digital micromirror device, a two-dimensional array of LEDs, a two-dimensional array of lasers, and/or optically addressed light valves. In the illustrated example, the projector 56 includes a radiant energy source 58 such as a UV lamp, an image forming apparatus 60 operable to receive a source beam 62 from the radiant energy source 58 and generate a patterned image 64 to be projected onto the surface of the first resin R, and optionally focusing optics 66, such as one or more lenses.

The image forming apparatus 60 may include one or more mirrors, prisms, and/or lenses and is provided with suitable actuators, and arranged so that the source beam 62 from the radiant energy source 58 can be transformed into a pixelated image 64 in an X-Y plane coincident with the surface of the first resin R. In the illustrated example, the image forming apparatus 60 may be a digital micro-mirror device.

The projector 56 may incorporate additional components, such as actuators, mirrors, etc. configured to selectively move the image forming apparatus 60 or other part of the projector 56 with the effect of rastering or shifting the location of the patterned image 64 on the build surface 30. Stated another way, the patterned image 64 may be moved away from a nominal or starting location.

In addition to other types of radiant energy devices 20, the radiant energy device 20 may include a "scanned beam apparatus" used herein to refer generally to any device operable to generate a radiant energy beam of suitable energy level and other operating characteristics to cure the first resin R and to scan the beam over the surface of the first resin R in a desired pattern. For example, the scanned beam apparatus can include a radiant energy source 58 and a beam steering apparatus. The radiant energy source 58 may include any device operable to generate a beam of suitable power and other operating characteristics to cure the first resin R. Non-limiting examples of suitable radiant energy sources 58 include lasers or electron beam guns.

In some instances, the apparatus 10 may include a material retention assembly 68 that may be configured to retain the resin support 26 in a predefined position along the support plate 14. In some instances, the material retention assembly 68 can include one or more pneumatic actuation zones 70 with each pneumatic actuation zone 70 configured to selectively interact with the resin support 26 by producing a force on a surface of the resin support 26 opposite the first resin R.

The one or more pneumatic actuation zones 70 may apply a negative pressure on a first surface of the resin support 26 that is opposite to the first resin R, or a second side of the resin support 26, to produce a suction or vacuum on the resin support 26. The negative pressure may retain the resin support 26 in a desired position along the support plate 14. The one or more pneumatic actuation zones 70 may also apply a positive pressure on the first surface of the resin support 26 that is opposite to the first resin R, or a second side of the resin support 26, to produce a pushing force on the resin support 26. The positive pressure may release the resin support 26 from a component of the apparatus 10, such as the window 16, the material retention assembly 68, etc. As used herein, a "negative" pressure is any pressure that is less than an ambient pressure proximate to one or more pneumatic actuation zones 70 such that fluid may be drawn into the one or more pneumatic actuation zones 70. Conversely, a "positive" pressure is any pressure that is greater than an ambient pressure proximate to one or more pneumatic actuation zones 70 such that fluid may be exhausted from the one or more pneumatic actuation zones 70. Further, a "neutral" pressure is any pressure that is generally equal to an ambient pressure proximate to one or more pneumatic actuation zones 70.

In some examples, the pneumatic actuation zones 70 may be fluidly coupled with a pneumatic assembly 72 through various hoses and one or more ports. The pneumatic assembly 72 may include any device capable of providing a vacuum/suction and/or pushing a fluid, such as air or a process gas (e.g., nitrogen or argon), through the one or more pneumatic actuation zones 70. For instance, the pneumatic assembly 72 may include a pressurized fluid source that includes a compressor and/or a blower. The pneumatic assembly 72 may additionally or alternatively include any assembly capable of altering a pressure, such as a venturi vacuum pump. In some embodiments, one or more valves and/or switches may be coupled with the pneumatic assembly 72 and the one or more pneumatic actuation zones 70. The one or more valves and/or switches are configured to regulate a pressure to each of the one or more pneumatic actuation zones 70.

In some embodiments, the pneumatic actuation zone 70 includes one or more apertures 74 of any size and shape for interacting with the resin support 26. For instance, the apertures 74 may be any number and combination of holes, slits, or other geometric shapes defined by any component of the additive manufacturing apparatus 10, such as a portion of the support plate 14. Additionally, or alternatively, the apertures 74 may be defined by a portion of the support plate 14 being formed from a porous material, or through any other assembly in which a fluid may be moved from a first side of the support plate 14 to a second side of the support plate 14 to interact with the resin support 26.

In some examples, the pneumatic actuation zone 70 may be defined by a plenum 76. The plenum 76 may be of any size and may be similar or varied from the shape of any remaining plenum 76. In some instances, a gasket may be positioned about a rim of the plenum 76. Additionally or alternatively, the material retention assembly 68 may include one or more clamps that compressively maintain the resin support 26 along the support plate 14.

With further reference to FIGS. 1A and 1B, a viscosity modification assembly 78 may be integrated within the support plate 14 and/or otherwise operably coupled with the resin support 26. The viscosity modification assembly 78 may be configured to apply a shearing stress to the first resin R to alter (e.g., reduce) a viscosity of the first resin R. Additionally or alternatively, the viscosity modification assembly 78 may be configured to heat the first resin R to alter the viscosity of the first resin R. It will be appreciated that in embodiments that heat the first resin R to alter the viscosity of the first resin R, the heat provided may be within a predefined range that is sufficient to alter the viscosity of the first resin R without causing any cross-linking in the polymer.

In some embodiments, the viscosity modification assembly 78 may be configured to mechanically vibrate a portion of the support plate 14 to create a shearing stress on the first resin R. For example, the viscosity modification assembly 78 may include a movement device 80 (e.g., a transducer) that is operably coupled with the support plate 14. The movement device 80 may be configured to vibrate at least a portion of the support plate 14 or any other module of the apparatus 10 that is then transferred to the first resin R. Additionally and/or alternatively, the movement device 80 may be configured to convert electrical energy to ultrasonic mechanical pressure waves that are transferred to the first resin R. For instance, the movement device 80 may be in the form of an ultrasonic vibrating device, such as one utilizing a piezoelectric transducer. In other embodiments, the viscosity modification assembly 78, in addition to or in lieu of the transducer, may include, alone or in conjunction with one or the other, a fluid, an acoustic, a motor (e.g., offset cam), a reciprocating piston, or any other movement device 80.

The movement device 80 may be operably coupled with the computing system 84. The computing system 84 may include a signal generator that supplies an electric impulse to the movement device 80, the voltage of which can be varied at different frequencies and with different waveshapes. The signal may, for example, be a pure sinusoidal wave or may be modulated with one or more other frequencies. Alternatively, the signal may be a stepped or spiked pulse. In some embodiments, the signal generator transmits a signal of between 20-80 kHz. For example, the signal is at about 60 kHz. The signal generator may, for example, transmit a constant amplitude signal at a constant frequency, or alternate one or both of these parameters. A power level can be selected as a percentage of maximum power.

In other embodiments, the viscosity modification assembly 78 may be configured to create a shearing stress on the first resin R through other configurations without departing from the scope of the present disclosure. For example, the viscosity modification assembly 78 may be configured as a probe that may be adjacent and in physical contact with the resin support 26 and/or any other module that may relay the shearing stress to the first resin R on the resin support 26. Additionally or alternatively, the viscosity modification assembly 78 may be configured as an ultrasonic or vibration plate that may be operably coupled with the resin support 26 and/or any other module of the apparatus 10 that may provide the shearing stress to the first resin R on the resin support 26.

With further reference to FIGS. 1A and 1B, in various embodiments, a gasket 82 may be positioned between the window 16 and the support plate 14 to isolate movement of each of the window 16 and the support plate 14 from one another. By isolating movement of the window 16 from the support plate 14, degradation issues of the apparatus 10 caused through the operation of viscosity modification assembly 78 may be mitigated. In various examples, the gasket 82 may be formed from a motion attenuating material, such as any of a wide variety of resilient elastomers including, but not limited to, materials containing natural rubber and silicone.

As provided herein, in some instances, the viscosity modification assembly 78 may additionally or alternatively be capable of producing heat to alter the viscosity of the first resin R. For example, fast heating processes, such as dielectric or microwave heating, can be used to avoid exposing the first resin R to a long heating cycle before the temperature of use is reached.

The computing system 84 in FIGS. 1A and 1B is a generalized representation of the hardware and software that may be implemented to control the operation of the apparatus 10, including some or all of the stage 18, the drive system 28, the radiant energy device 20, the actuator assembly 46, the material retention assembly 68, the viscosity modification assembly 78, a movement device 80, actuators, and the various parts of the apparatus 10 described herein. The computing system 84 may be embodied, for example, by software running on one or more processors embodied in one or more devices such as a programmable logic controller ("PLC") or a microcomputer. Such processors may be coupled to process sensors and operating components, for example, through wired or wireless connections. The same processor or processors may be used to retrieve and analyze sensor data, for statistical analysis, and for feedback control. Numerous aspects of the apparatus 10 may be subject to closed-loop control.

Optionally, the components of the apparatus 10 may be surrounded by a housing 86, which may be used to provide a shielding or inert gas (e.g., a "process gas") atmosphere using gas ports 88. Optionally, the pressure within the housing 86 could be maintained at a desired level greater than or less than atmospheric. Optionally, the housing 86 could be temperature and/or humidity controlled. Optionally, ventilation of the housing 86 could be controlled based on factors such as a time interval, temperature, humidity, and/or chemical species concentration. In some embodiments, the housing 86 can be maintained at a pressure that is different than an atmospheric pressure.

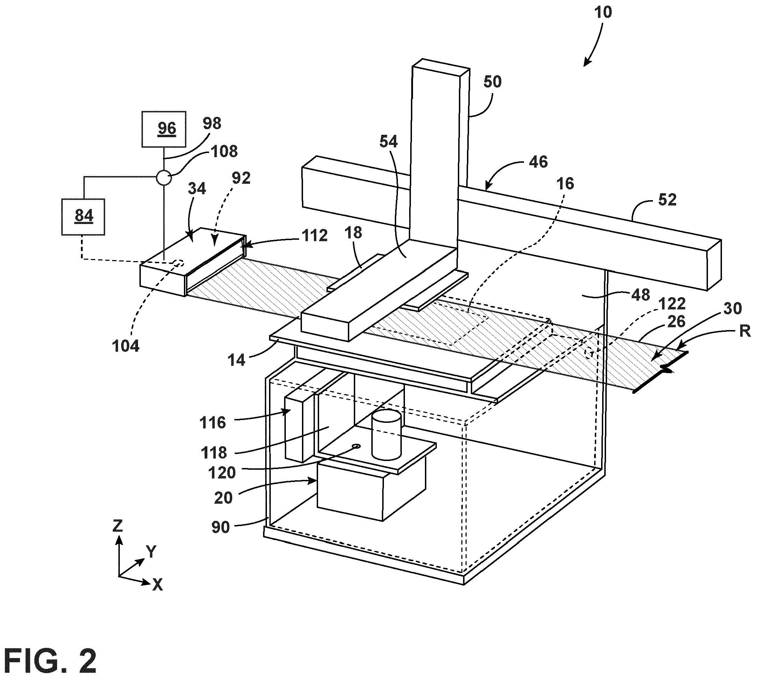

Referring to FIG. 2, a perspective view of the additive manufacturing apparatus 10 is provided in accordance with exemplary embodiments of the present disclosure. The exemplary apparatus 10 may include a base structure 90 and a static support 48 extending from the base structure 90. In the illustrated embodiment, the actuator assembly 46 is operably coupled with the static support 48 and is configured to change a position of the stage 18. However, it will be appreciated that the actuator assembly 46 may be operably coupled with any other component without departing from the scope of the present disclosure.

As illustrated, the actuator assembly 46 includes the first actuator 50 operably coupled with the static support 48 and a second actuator 52 operably coupled with and moveable along the first actuator 50. The stage 18 may be operably coupled with and moveable along the second actuator. In various embodiments, when the stage 18 is moved along the X-axis direction through the use of the first actuator 50, the second actuator 52, and the stage 18 move along the first actuator 50. When the stage 18 is moved in the Z-axis direction through the use of the second actuator 52, the stage 18 moves along the second actuator 52. While the first actuator 50 is illustrated translating in the X-direction and the second actuator 52 is illustrated translating in the Z-axis direction in FIG. 2, it will be appreciated that each actuator may be coupled to and moveable with any other actuator and/or the stage 18 without departing from the scope of the present disclosure. It will be appreciated that the terms "first actuator" and "second actuator" are used herein for clarity purposes. It will be understood that the additive manufacturing apparatus 10 may include any one or more of the actuators without departing from the scope of the present disclosure.

With further reference to FIG. 2, the resin support 26 may be operably coupled with the feed module 22 (FIG. 1A) and the take-up module 24 (FIG. 1A). In some instances, the material depositor 34 may be configured to deposit the first resin R onto the resin support 26 at a position between the feed module and the take-up module. In various examples, the material deposition can include a reservoir 92 configured to retain the first resin R. The material depositor 34 can further include a vessel 96 fluidly coupled with the reservoir 92. A conduit 98 extends from the vessel 96 to direct the first resin R from the vessel 96 to the reservoir 92.

In various embodiments, the material depositor 34 can further include a volume sensor 104. The volume sensor 104 can be configured to provide signals to the computing system 84 related to a volume of the first resin R within the reservoir 92. The computing system 84 is configured to receive the monitoring signals and process such signals using predetermined algorithms to generate control signals for controlling a regulator 108, which may allow or restrict flow of the first resin R from vessel 96 to the reservoir 92. In this manner, closed-loop control of the volume of the first resin R can be achieved. The volume sensor 104 may be embodied as one or more imaging sensors or any other vision-based device. The volume sensor 104 may additionally and/or alternatively be configured as any other practicable proximity sensor, such as, but not limited to, an ultrasonic sensor, a radar sensor, a LIDAR sensor, or the like.

With further reference to FIG. 2, a thickness assembly 112 can be used to control the thickness of the first resin R applied to the resin support 26 as the first resin R is deposited on the resin support 26. In the illustrated embodiment, the thickness of the first resin R may be defined through the usage of a doctor blade. In various embodiments, other material depositing apparatuses can be used separately or in combination with the doctor blade, such as but not limited to, gravure rolls, metering rolls, weir-based cascades, direct die casting, and a combination thereof.

Still referring to FIG. 2, a radiant energy device 20 may be positioned within the base structure 90. As an option, the radiant energy device 20 may be coupled with an image movement device 116 through a bracket 118. The movement device 80 may include actuators, mirrors, etc. that are configured to selectively move the radiant energy device 20, or another part of the radiant energy device 20, with the effect of rastering or shifting the location of a patterned image 64 relative to the window 16. Stated another way, the patterned image 64 may be moved away from a nominal or starting location. This permits a single radiant energy device 20 to cover a larger build area, for example. This type of image projection may be referred to herein as a "tiled image".

Additionally or alternatively, the apparatus 10 may include a plurality of radiant energy devices 20 that are operably coupled with the build zone 32. Each of the plurality of radiant energy devices 20 may or may not be configured to translate below the window 16 and/or the support plate 14. Moreover, each of the plurality of radiant energy devices 20 may generate an image 64 that at least partially overlaps with an image 64 of an additional radiant energy device to form a stitched image on the first resin R. In various embodiments, the images 64 from each of the plurality of radiant energy devices 20 may have some degree of overlap where that overlap is a single pixel, less than one pixel (for example, half a pixel), or more than one pixel. Further, in some embodiments, optics 66 may be optically coupled with the one or more radiant energy devices 20. In such instances, at least one of the one or more radiant energy devices 20 and/or the optics 66 may translate along the Y-axis and/or otherwise move through the movement device 80 to produce patterned images 64 on various portions of the resin support 26.

Further, in some embodiments, the apparatus 10 may include one or more sensors 120 that are configured to detect information related to a position of the stage 18, the resin support 26, and/or the radiant energy device 20. For example, the one or more sensors 120 may verify the position of the stage 18 and/or the resin support 26 each time the stage 18 and/or the resin support 26 are moved by the actuator assembly 46. Likewise, the one or more sensors 120 may verify the location of the radiant energy device 20 each time the radiant energy device 20 is translated by the movement device 80. In various embodiments, the one or more sensors 120 may be any combination of devices that is configured to provide information indicative of a position of the stage 18 and/or the resin support 26 or a location of the radiant energy device 20. For example, the one or more sensors 120 may include a gyroscope, an accelerometer, a proximity sensor, an image sensor, and/or any other practicable sensor.

In operation, the radiant energy device 20 and/or the movement assembly may produce heat. Accordingly, one or more vents and/or fans 122 may be positioned within the base structure 90 to remove heat from the base structure 90. The one or more fans 122 may be configured as any fluid movement device 80 that is capable of drawing the heated air from the base structure 90 to an area proximate to the base structure 90.

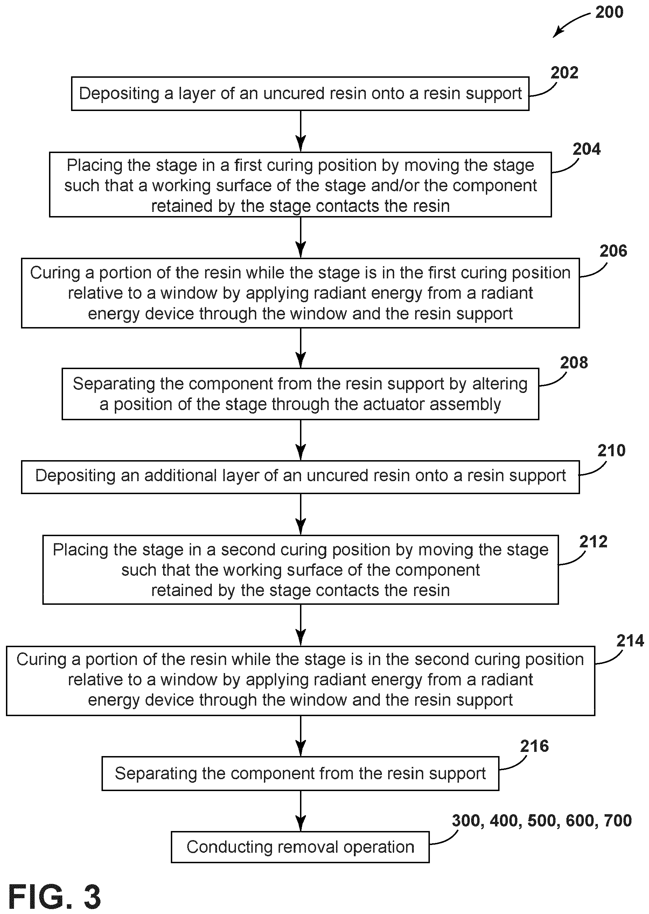

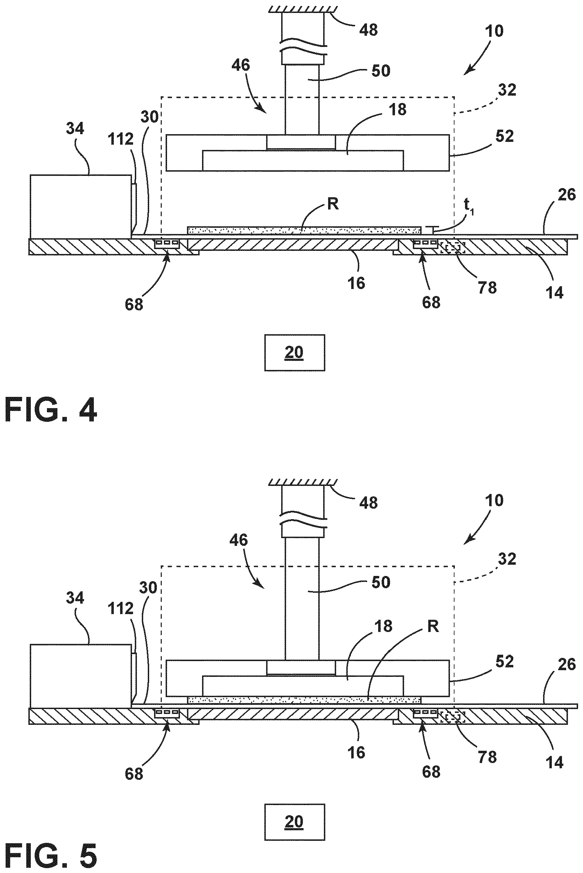

Referring now to FIG. 3, a method 200 for operating an additive manufacturing apparatus 10 is provided in accordance with various aspects of the present disclosure. The various steps of method 200 are schematically illustrated in FIGS. 4-11. The method 200 can be used to operate the additive manufacturing apparatus 10 or any other suitable additive manufacturing apparatus. It should be appreciated that the example method 200 is discussed herein only to describe example aspects of the present subject matter and is not intended to be limiting. Any of the steps within FIG. 3 may be omitted without departing from the scope of the present disclosure.

Referring now to FIGS. 3 and 4, the method 200 can include, at step 202, depositing a layer of an uncured first resin R onto a resin support 26. A first thickness t₁ of the layer of the uncured first resin R may be defined by the thickness assembly 112. While the first resin R is deposited onto the resin support 26 and/or after the deposition of the first resin R onto the resin support 26, the resin support 26 may be translated in an X-axis direction into a build zone 32.

As shown in FIGS. 3 and 5, at step 204, the method 200 can include placing the stage 18 in a first curing position by moving the stage 18 such that a working surface of the stage 18 and/or the component 12 retained by the stage 18 contacts the first resin R. As the stage 18 is moved to the first curing position, a working surface of the stage 18 and/or the component 12 retained by the stage 18 contacts the first resin R.

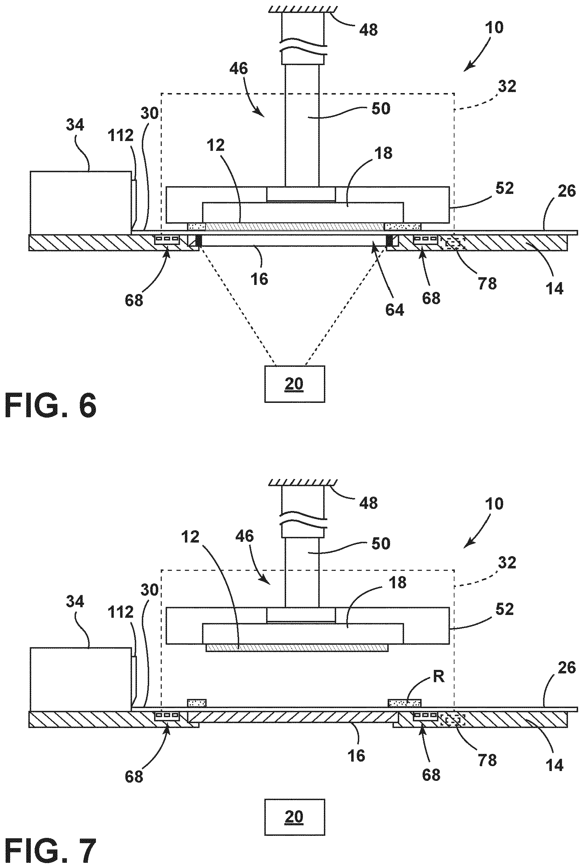

As shown in FIGS. 3 and 6, at step 206, the method 200 can include curing a portion of the first resin R while the stage 18 is in the first curing position relative to a window 16 by applying radiant energy from a radiant energy device 20 through the window 16 and the resin support 26. As provided herein, the radiant energy may be in the form of a first patterned image 64 that is transmitted through at least a portion of the window 16. The portion of the first resin R that is cured forms a layer of the component 12 that is retained by the stage 18. In the illustrated examples, the image 64 is shown having white portions and dark portions. The white portions may represent an area in which radiant energy is projected to form the image 64 while the darkened portions may represent an area in which radiant energy is not projected. It will be appreciated that the projected radiant energy may be of a common intensity and/or varied for a first portion of the image 64 relative to a second portion of the image 64.

As shown in FIGS. 3 and 7, at step 208, the method 200 can include separating the component 12 from the resin support 26 by altering a position of the stage 18 through the actuator assembly 46.

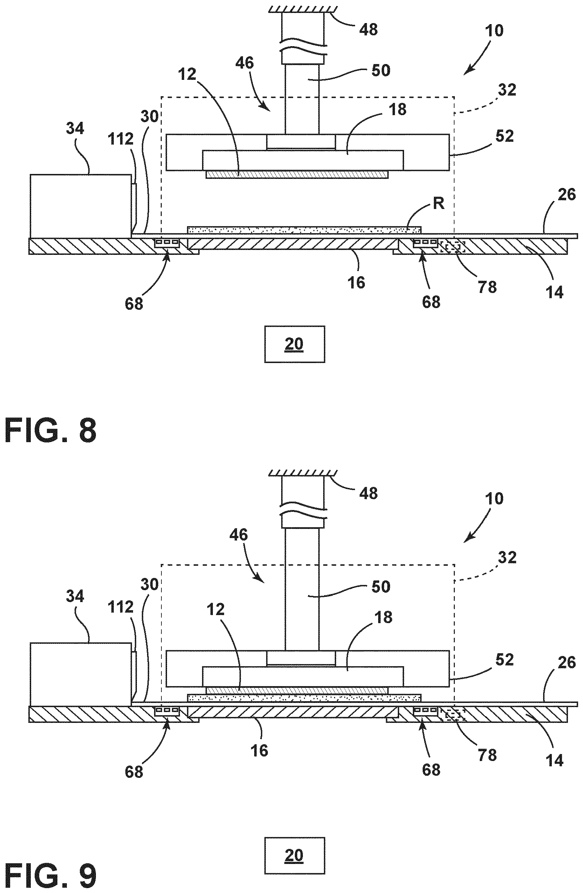

As shown in FIGS. 3 and 8, the method 200 can include, at step 210, depositing an additional layer of an uncured first resin R onto a resin support 26. The additional layer of the uncured first resin R may be defined by the thickness assembly 112, which may be generally equal to the first thickness t₁ and/or varied from the first thickness t₁. While the first resin R is deposited onto the resin support 26 and/or after the deposition of the first resin R onto the resin support 26, the resin support 26 may be translated in an X-axis direction into a build zone 32.

As shown in FIGS. 3 and 9, at step 212, the method 200 can include placing the stage 18 in a second curing position by moving the stage 18 such that the working surface of the component 12 retained by the stage 18 contacts the first resin R.

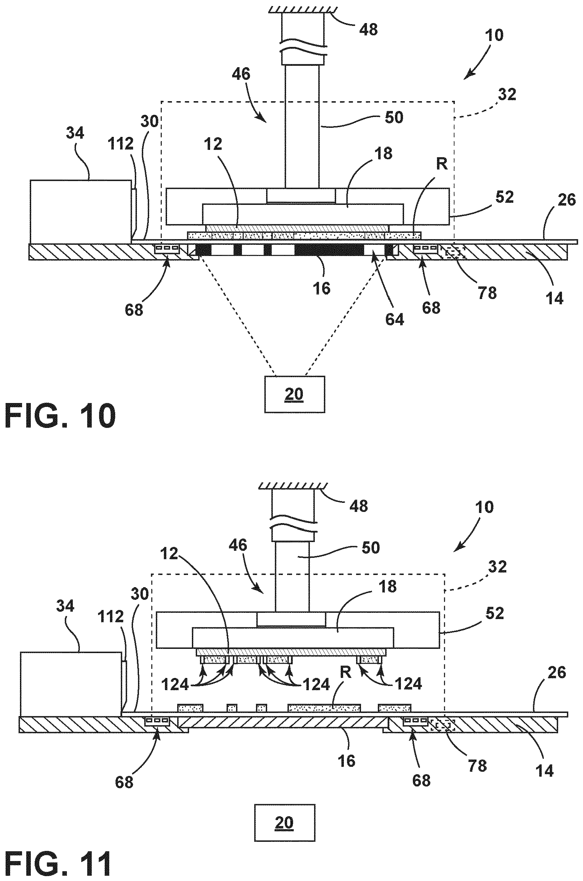

As shown in FIGS. 3 and 10, at step 214, the method 200 can include curing a portion of the first resin R while the stage 18 is in the second curing position relative to the window 16 by applying radiant energy from a radiant energy device 20 through the window 16 and the resin support 26. As provided herein, the radiant energy may be in the form of a patterned image 64 that is transmitted through at least a portion of the window 16. The portion of the second first resin R that is cured forms a layer of the component 12 that is retained by the stage 18.

As shown in FIGS. 3 and 11, at step 216, the method 200 can include separating the component 12 from the resin support 26 by altering a position of the stage 18 through the actuator assembly 46. However, as shown in FIG. 11, in some instances, residual resin 124 may be attached to the component 12 once the component 12 is separated from the layer of uncured first resin R. As provided herein, the residual resin 124 may be inadvertently coupled with the component 12. The residual resin 124 may be in the form of uncured resin and/or partially cured resin that is to be removed from the component 12.

As shown in FIG. 3, the method 200 can include conducting a removal operation at steps 300, 400, 500, 600, 700. Prior to and/or after a layer of the component 12 is formed, such as that generally described in step 204 and/or step 208, the residual resin 124 may be removed from the stage 18 and/or the component 12 prior to the formation of an additional layer of the component 12 and/or after a final layer of the component 12 is formed through a removal operation. The residual resin 124 may be removed through any one or more of the removal operations provided herein. In addition, it will be appreciated that the residual resin 124 may be removed through any other removal operation without departing from the scope of the present disclosure.

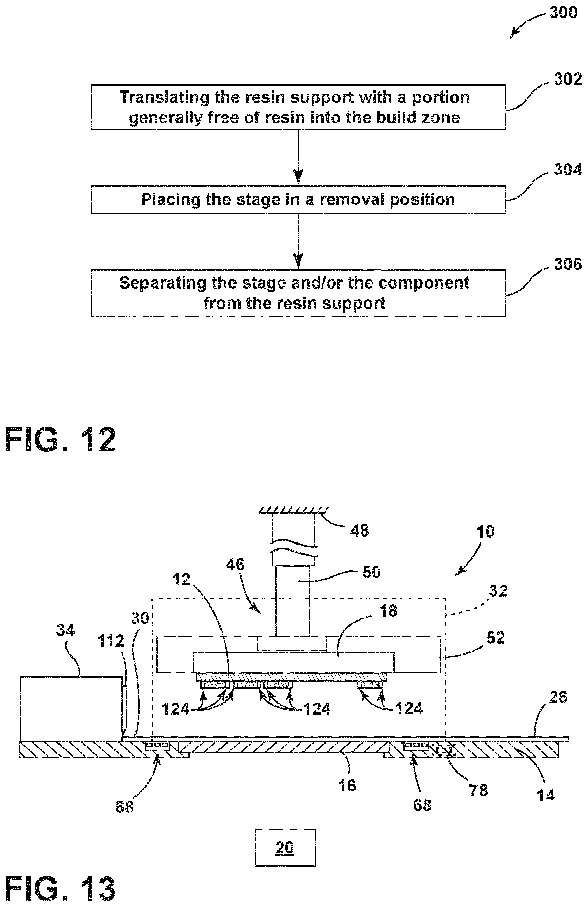

Referring now to FIGS. 12-33, one or more removal operations 300, 400, 500, 600, 700 may be performed to remove at least a portion of the residual resin 124 that remains on the component 12 and/or the stage 18. The removal operations 300, 400, 500, 600, 700 may be combined with any other removal operation 300, 400, 500, 600, 700. In such instances, the steps of the combined removal operations 300, 400, 500, 600, 700 may be performed in any order or combination without departing from the teachings provided herein.

As will be described in greater detail below, various removal operations 400, 500, 600, 700 may utilize the first, component resin that may also be used to form the one or more layers of the component 12 and/or a second, cleaning resin that may be used to remove the residual resin. As such, the first resin R may be generally similar or different from the second resin R. In some instances, the first resin may be a slurry based resin while the second resin may be a pure resin. In some instances, the material depositor 34 may be positioned along the resin support 26 and configured to apply the first resin R and/or the second resin R on the resin support 26. In addition, a thickness assembly 112 can be used to control the thickness of the first resin R and/or the second resin R applied to the resin support 26 as the first resin R and/or the second resin R is deposited on the resin support 26. In the illustrated embodiment, the thickness of the first resin R and/or the second resin R may be defined through the usage of a doctor blade. In various embodiments, other material depositing apparatuses and thickness assemblies may be utilized without departing from the scope of the present disclosure.

Additionally, the first resin R and/or the second resin R utilized during the removal operations 400, 500, 600, 700 described herein may be uncured, partially cured (e.g., below gel), cured to gel, and/or cured to beyond gel. Moreover, in some instances, the first resin R and/or the second resin R may be a loaded resin and/or an unloaded resin that is supported by the resin support 26. In some examples, the first resin R and/or the second resin R can be viscous and/or tacky. Therefore, the residual resin 124 may preferentially stick to itself rather than to the component 12. In various examples, a light penetration into a loaded resin can be less than in an unloaded resin. Thus, for a thicker cross section, the component 12 may be built in thin layers but could be cleaned through one or more removal operations 400, 500, 600, 700 in much thicker layers. Or, the thickness of the first resin R and/or the second resin R during the removal operations 400, 500, 600, 700 can be thinner so there is less chance that the cleaning resin will cure on to the component 12.

In several examples, the various components of the additive manufacturing apparatus 10 may be activated during the removal operation 300, 400, 500, 600, 700 to further assist in removing the residual resin 124 from the component 12. For instance, the one or more pneumatic actuation zones 70 of the material retention assembly 68 may apply a negative pressure on the first surface of the resin support 26 that is opposite to the first resin R and/or the second resin R, or a second side of the resin support 26, to produce a suction or vacuum on the resin support 26. The negative pressure may retain the resin support 26 in a desired position along the support plate 14 during the removal operations 300, 400, 500, 600, 700. The one or more pneumatic actuation zones 70 may also apply a positive pressure on the first surface of the resin support 26 that is opposite to the first resin R and/or the second resin R, or a second side of the resin support 26, to produce a pushing force on the resin support 26. The positive pressure may release the resin support 26 from a component 12 of the apparatus 10, such as the window 16, the material retention assembly 68, etc. In addition, the positive pressure may press the resin support 26 into one of more features of the component 12 thereby contacting the residual resin 124 and possibly removing the residual resin 124 from the component 12.

Further, in some examples, the viscosity modification assembly 78 may additionally or alternatively be activated during the removal operation 300, 400, 500, 600, 700. The movement device 80 may be configured to vibrate at least a portion of the support plate 14 or any other module of the apparatus 10 that is then transferred to the component 12 to separate the residual resin 124 from the component 12.

With further reference to FIGS. 12-15, in some instances, the removal operation may include contacting the component 12 with the resin support 26 while the resin support 26 is generally free of the first resin R and/or the second resin R. One such operation is shown in FIG. 12 and schematically illustrated in FIGS. 13-15. The removal operation 300 can be used to operate the additive manufacturing apparatus 10 or any other suitable additive manufacturing apparatus. It should be appreciated that the example operation 300 is discussed herein only to describe example aspects of the present subject matter and is not intended to be limiting. Any of the steps within FIG. 12 may be omitted without departing from the scope of the present disclosure. In addition, the removal operation 300 described in FIG. 12 may be combined with any other removal operation 400, 500, 600, 700 described herein. In such instances, the steps of the combined removal operations may be performed in any order or combination without departing from the teachings provided herein.

As shown in FIGS. 12 and 13, at step 302, the removal operation 300 can include translating the resin support 26 with a portion generally free of the first resin R and/or the second resin R into the build zone 32.

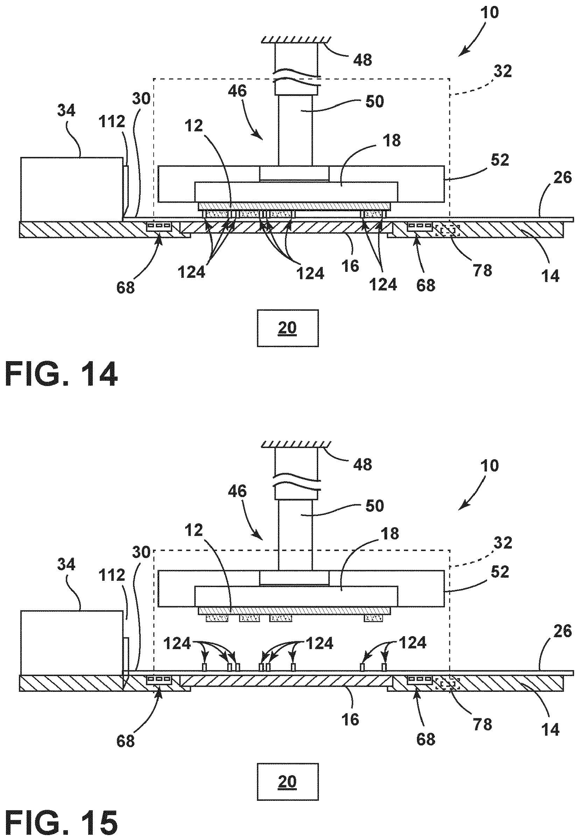

As shown in FIGS. 12 and 14, at step 304, the removal operation can include placing the stage 18 in a removal position by moving the stage 18 such that a working surface of the stage 18 and/or the component 12 retained by the stage 18 contacts the second surface (e.g., the build surface 30) of the resin support 26. In some instances, the viscosity modification assembly 78 may be activated while the working surface is in contact with the resin support 26.

As shown in FIGS. 12 and 15, at step 306, the removal operation can include separating the stage 18 and/or the component 12 from the resin support 26 by altering a position of the stage 18 through the actuator assembly 46. As the stage 18 and/or the component 12 are separated from the resin support 26, at least a portion of the residual resin 124 may be retained on the resin support 26.

With at least a portion of the residual resin 124 separated from the component 12, an additional layer of uncured first resin R and/or second resin R may be translated into the build zone 32 and an additional layer of the component 12 may be formed. Alternatively, with at least a portion of the residual resin 124 removed, the component 12 may be removed from the stage 18. Alternatively still, the removal operation 300 may be performed a second time to further remove any residual resin 124 remaining on the component 12. Alternatively still, additional removal operations 400, 500, 600, 700 may be performed to further remove any residual resin 124 remaining on the component 12.

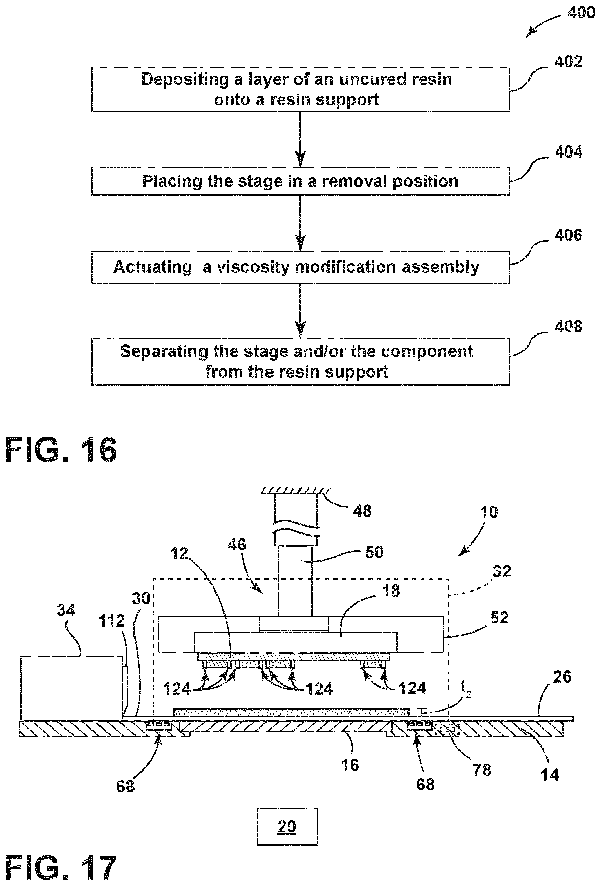

With further reference to FIGS. 16-19, in some instances, the removal operation may include contacting the component 12 with a layer of uncured first resin R and/or second resin R on the resin support 26. One such operation is shown in FIG. 16 and schematically illustrated in FIGS. 17-19. The removal operation 400 can be used to operate the additive manufacturing apparatus 10 or any other suitable additive manufacturing apparatus. It should be appreciated that the example operation 400 is discussed herein only to describe example aspects of the present subject matter and is not intended to be limiting. Any of the steps within FIG. 16 may be omitted without departing from the scope of the present disclosure. In addition, the removal operation 400 described in FIG. 16 may be combined with any other removal operation 300, 500, 600, 700 described herein. In such instances, the steps of the combined removal operations may be performed in any order or combination without departing from the teachings provided herein.

As shown in FIGS. 16 and 17, at step 402, the removal operation 400 can include depositing a layer of an uncured first resin R and/or second resin R onto a resin support 26. A second thickness t₂ of the layer of the uncured first resin R and/or second resin R may be defined by the thickness assembly 112. The second thickness t₂ may be generally equal to the first thickness t₁ or different from the first thickness t₁. While the first resin R and/or second resin R is deposited onto the resin support 26 and/or after the deposition of the first resin R and/or second resin R onto the resin support 26, the resin support 26 may be translated in an X-axis direction into a build zone 32.

Alternatively, in some instances, the removal operation 400 can include maintaining the used portion of first resin R and/or second resin R within the build zone 32 and/or any other surface that the residual resin 124 may stick to preferentially over the component 12.

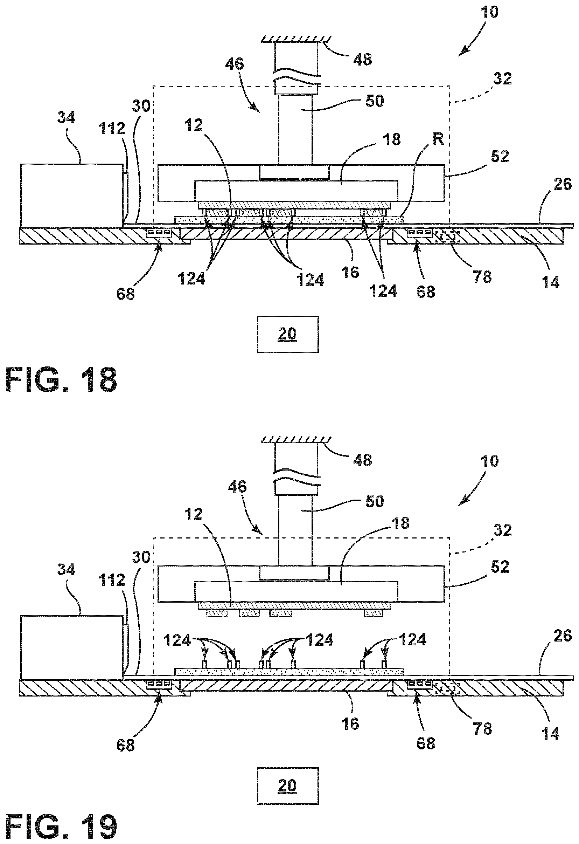

As shown in FIGS. 16 and 18, at step 404, the removal operation 400 can include placing the stage 18 in a removal position by moving the stage 18 such that a working surface of the stage 18 and/or the component 12 retained by the stage 18 contacts the first resin R and/or second resin R.

In some instances, with the stage 18 in the removal position, at step 406, the removal operation 400 can include actuating a viscosity modification assembly 78. As provided herein, the viscosity modification assembly 78 may be configured to mechanically vibrate a portion of the support plate 14. The vibration may be transferred to the component 12 thereby encouraging the residual resin 124 to separate from the component 12.

As shown in FIGS. 16 and 19, at step 408, the removal operation 400 can include separating the stage 18 and/or the component 12 from the first resin R and/or second resin R by altering a position of the stage 18 through the actuator assembly 46. As the stage 18 and/or the component 12 are separated from the resin support 26, at least a portion of the residual resin 124 may be retained on the resin support 26.

With at least a portion of the residual resin 124 separated from the component 12, an additional layer of uncured first resin R and/or second resin R may be translated into the build zone 32 and an additional layer of the component 12 may be formed. Alternatively, with at least a portion of the residual resin 124 removed, the component 12 may be removed from the stage 18. Alternatively still, the removal operation 400 may be performed a second time to further remove any residual resin 124 remaining on the component 12. Alternatively still, additional removal operations 300, 500, 600, 700 may be performed to further remove any residual resin 124 remaining on the component 12.

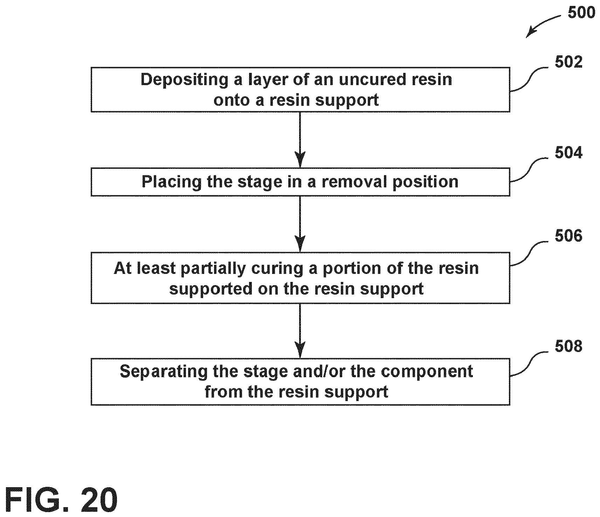

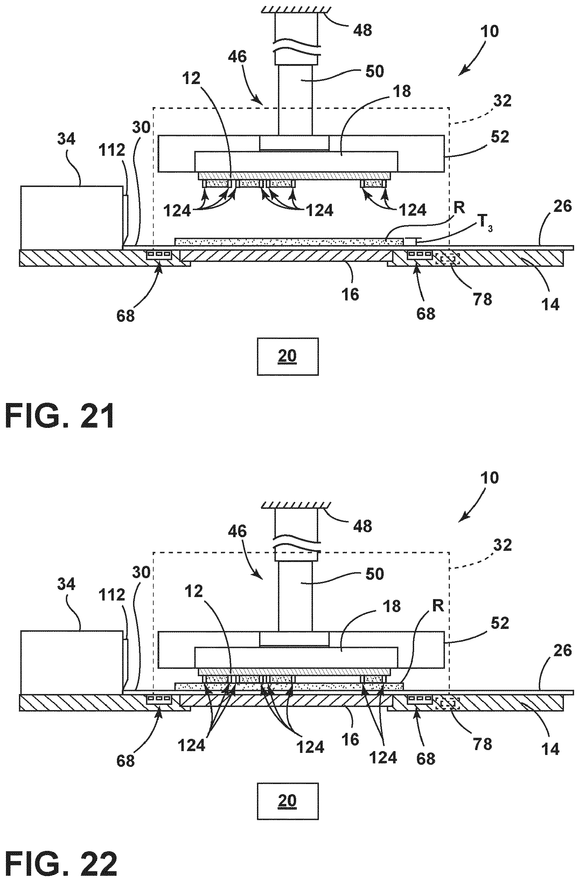

With further reference to FIGS. 20-24, in some instances, the removal operation may include contacting the component 12 with a layer of first resin R and/or second resin R and at least partially curing the first resin R and/or second resin R on the resin support 26. One such operation is shown in FIG. 20 and schematically illustrated in FIGS. 21-24. The removal operation 500 can be used to operate the additive manufacturing apparatus 10 or any other suitable additive manufacturing apparatus. It should be appreciated that the example operation 500 is discussed herein only to describe example aspects of the present subject matter and is not intended to be limiting. Any of the steps within FIG. 20 may be omitted without departing from the scope of the present disclosure. In addition, the removal operation 500 described in FIG. 20 may be combined with any other removal operation 300, 400, 600, 700 described herein. In such instances, the steps of the combined removal operations may be performed in any order or combination without departing from the teachings provided herein.

As shown in FIGS. 20 and 21, at step 502, the removal operation 500 can include depositing a layer of an uncured first resin R and/or second resin R onto a resin support 26. A third thickness t₃ of the layer of the uncured first resin R and/or second resin R may be defined by the thickness assembly 112. The third thickness t₃ may be generally equal to the first thickness t₁ and/or the second thickness t₂ or different than each of the first thickness t₁ and/or the second thickness t₂. While the first resin R and/or second resin R is deposited onto the resin support 26 and/or after the deposition of the first resin R and/or second resin R onto the resin support 26, the resin support 26 may be translated in an X-axis direction into a build zone 32.

As shown in FIGS. 20 and 22, at step 504, the removal operation 500 can include placing the stage 18 in a removal position by moving the stage 18 such that a working surface of the stage 18 and/or the component 12 retained by the stage 18 contacts the first resin R and/or second resin R on the resin support 26.

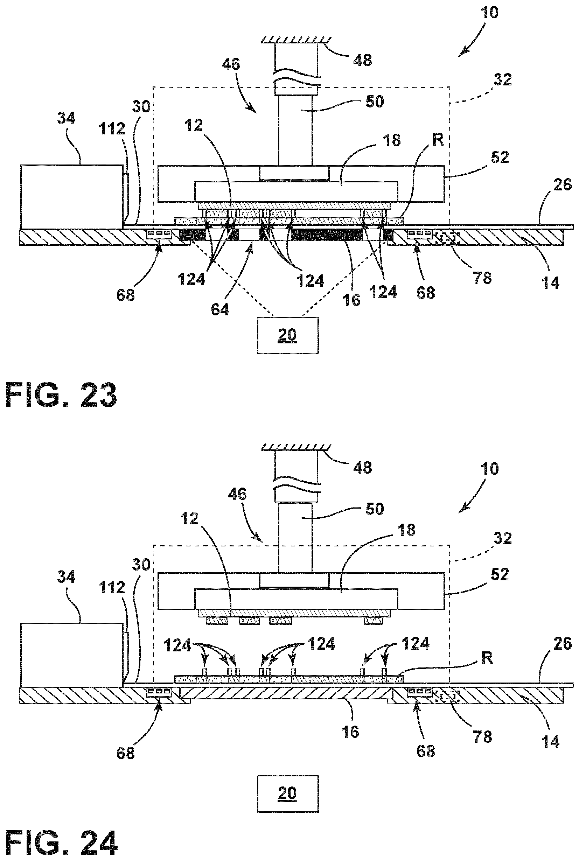

As shown in FIGS. 20 and 23, at step 506, the removal operation can include at least partially curing a portion of the first resin R and/or second resin R supported on the resin support 26. In a partially cured state, the first resin R and/or second resin R may be maintained in a gel-like state to further enhance the tackiness of the first resin R and/or second resin R on the resin support 26.

In some instances, the cured portion may generally correspond to a negative image 64 or inverse of a geometry of the last formed layer (e.g., the layer formed in step 214 in FIG. 3) of the component 12. In some instances, the cured portions of the first resin R and/or second resin R may be generally similar to the geometry of the last formed layer of the component 12 and may be offset in the X-axis direction and/or the Y-axis direction relative to the component 12. In various embodiments, the cured portion may additionally or alternatively be any other design in which at least a portion of the first resin R and/or second resin R is cured.

As shown in FIGS. 20 and 24, at step 508, the removal operation 500 can include separating the stage 18 and/or the component 12 from the first resin R and/or second resin R by altering a position of the stage 18 through the actuator assembly 46. As the stage 18 and/or the component 12 are separated from the resin support 26, at least a portion of the residual resin 124 may be retained by the cured portion (and/or the uncured portion) of the first resin R and/or second resin R on the resin support 26. In addition, the cured portions of the first resin R and/or second resin R may further adhere to the resin support 26.

With at least a portion of the residual resin 124 separated from the component 12, an additional layer of uncured first resin R and/or second resin R may be translated into the build zone 32 and an additional layer of the component 12 may be formed. Alternatively, with at least a portion of the residual resin 124 removed, the component 12 may be removed from the stage 18. Alternatively still, the removal operation 500 may be performed a second time to further remove any residual resin 124 remaining on the component 12. Alternatively, still, additional removal operations may be performed to further remove any residual resin 124 remaining on the component 12.

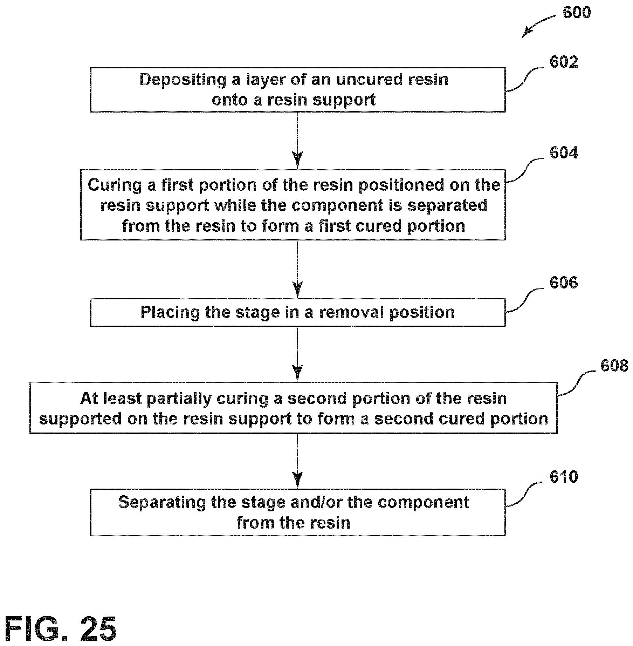

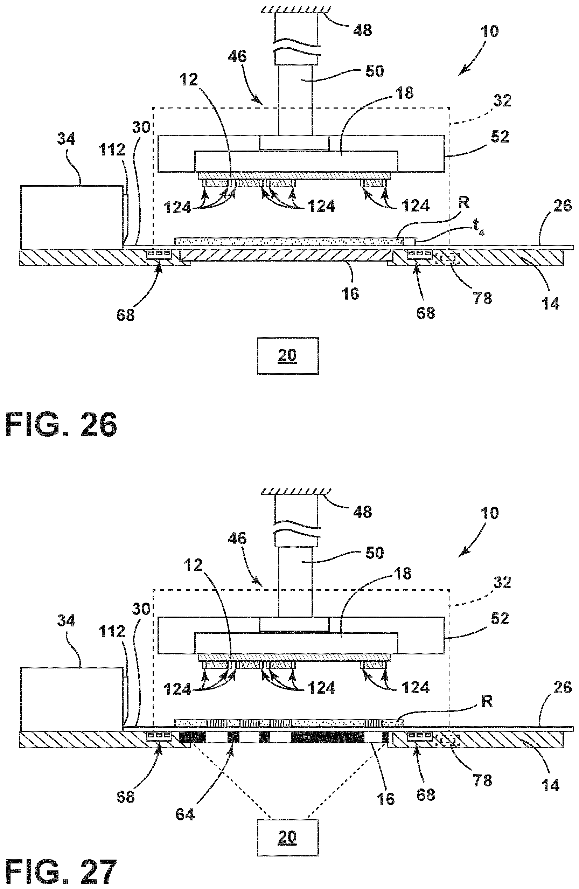

With further reference to FIGS. 25-29, in some instances, the removal operation may include contacting the component 12 with a layer of at least partially cured first resin R and/or second resin R on the resin support 26. One such operation is shown in FIG. 25 and schematically illustrated in FIGS. 26-29. The removal operation 600 can be used to operate the additive manufacturing apparatus 10 or any other suitable additive manufacturing apparatus. It should be appreciated that the example operation 600 is discussed herein only to describe example aspects of the present subject matter and is not intended to be limiting. Any of the steps within FIG. 25 may be omitted without departing from the scope of the present disclosure. In addition, the removal operation 600 described in FIG. 25 may be combined with any other removal operation 300, 400, 500, 700 described herein. In such instances, the steps of the combined removal operations may be performed in any order or combination without departing from the teachings provided herein.

As shown in FIGS. 25 and 26, at step 602, the removal operation 600 can include depositing a layer of an uncured first resin R and/or second resin R onto a resin support 26. A fourth thickness t₄ of the layer of the uncured first resin R and/or second resin R may be defined by the thickness assembly 112. The fourth thickness t₄ may be generally equal to the first thickness t₁, the second thickness t₂, and/or the third thickness t₃ or different than each of the first thickness t₁, the second thickness t₂, and/or the third thickness t₃. While the first resin R and/or second resin R is deposited onto the resin support 26 and/or after the deposition of the first resin R and/or second resin R onto the resin support 26, the resin support 26 may be translated in an X-axis direction into a build zone 32. It will be appreciated that each of the thicknesses t₁, t₂, t₃, t₄ herein are described sequentially for clarity purposes. As such, it will be appreciated that various implementations can include any of the thicknesses without any others. For example, the apparatus 10 need not use a first resin R and/or second resin R of a third thickness t₃ prior to using the first resin R and/or second resin R of the fourth thickness t₄, and so on.

As shown in FIGS. 25 and 27, at step 604, the removal operation 600 can include curing a first portion of the first resin R and/or second resin R positioned on the resin support 26 while the component 12 is separated from the first resin R and/or second resin R to form a first cured portion. In some instances, a geometry of the first cured portion may generally align with the last formed layer (e.g., the layer formed in step 214 in FIG. 3) of the component 12. In some instances, the first cured portion of the first resin R and/or second resin R may be generally similar to the geometry of the last formed layer of the component 12 and may be offset in the X-axis direction and/or the Y-axis direction relative to the component 12. In various embodiments, the first cured portion may additionally or alternatively be any other design in which at least a portion of the first resin R and/or second resin R is cured.

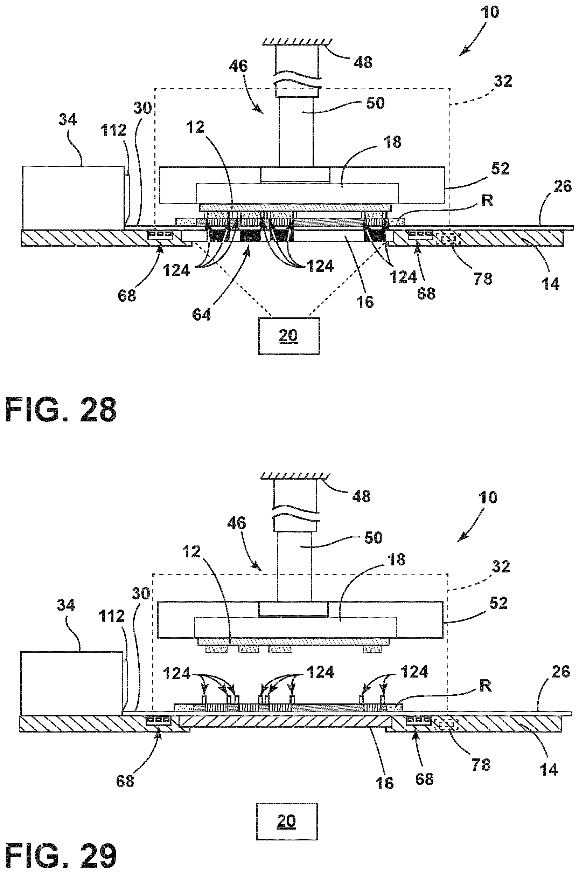

As shown in FIGS. 25 and 28, at step 606, the removal operation 600 can include placing the stage 18 in a removal position by moving the stage 18 such that a working surface of the stage 18 and/or the component 12 retained by the stage 18 contacts the first resin R and/or second resin R on the resin support 26.

As shown in FIGS. 25 and 28, at step 608, the removal operation 600 can include at least partially curing a second portion of the first resin R and/or second resin R supported on the resin support 26 to form a second cured portion. In some instances, the second cured portion may be at least partially offset from the first cured portion. In various embodiments, the second cured portion may generally correspond to a negative image 64 or inverse of a geometry of the first cured portion. In other embodiments, the second cured portion may additionally or alternatively be any other design in which at least a portion of the first resin R and/or second resin R is cured with the working surface of the component 12 and/or the stage 18 in contact with the first resin R and/or second resin R.

As shown in FIGS. 25 and 29, at step 610, the removal operation 600 can include separating the stage 18 and/or the component 12 from the first resin R and/or second resin R by altering a position of the stage 18 through the actuator assembly 46. As the stage 18 and/or the component 12 are separated from the first resin R and/or second resin R, at least a portion of the residual resin 124 may be retained by the first cured portion, the second cured portion, and/or any uncured portions of the first resin R and/or second resin R on the resin support 26. In addition, the cured portions of the first resin R and/or second resin R may further adhere to the resin support 26.

With at least a portion of the residual resin 124 separated from the component 12, an additional layer of uncured first resin R and/or second resin R may be translated into the build zone 32 and an additional layer of the component 12 may be formed. Alternatively, with at least a portion of the residual resin 124 removed, the component 12 may be removed from the stage 18. Alternatively still, the removal operation 600 may be performed a second time to further remove any residual resin 124 remaining on the component 12. Alternatively still, additional removal operations 300, 400, 500, 700 may be performed to further remove any residual resin 124 remaining on the component 12.

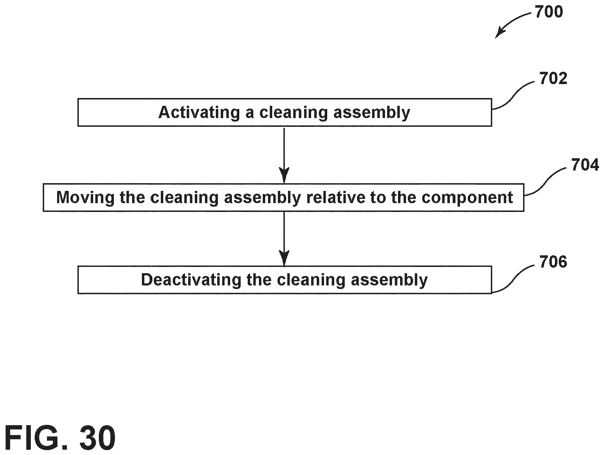

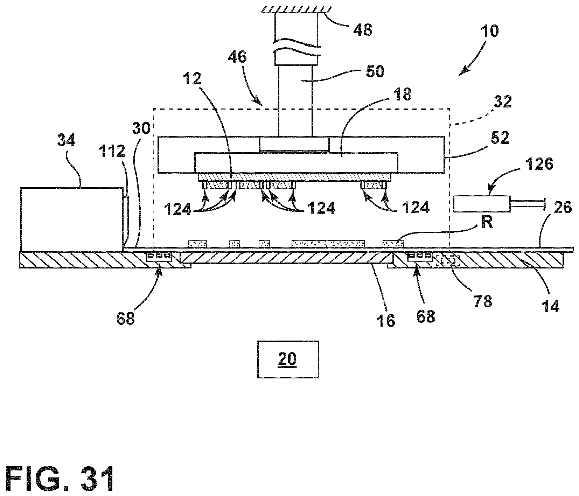

With further reference to FIGS. 30-33, in some instances, the removal operation may include actuating a cleaning assembly 126 to remove at least a portion of the residual resin 124 from the component 12. One such operation is shown in FIG. 30 and schematically illustrated in FIGS. 31-33. The removal operation 700 can be used to operate the additive manufacturing apparatus 10 or any other suitable additive manufacturing apparatus. It should be appreciated that the example operation 700 is discussed herein only to describe example aspects of the present subject matter and is not intended to be limiting. Any of the steps within FIG. 30 may be omitted without departing from the scope of the present disclosure. In addition, the removal operation 700 described in FIG. 30 may be combined with any other removal operation 300, 400, 500, 600 described herein. In such instances, the steps of the combined removal operations may be performed in any order or combination without departing from the teachings provided herein.

As shown in FIGS. 30 and 31, at step 702, the removal operation 700 can include activating a cleaning assembly 126. In various examples, the cleaning assembly 126 may incorporate a pneumatic assembly 72 that is configured to generate a negative pressure to produce a suction or vacuum proximate to the component 12 such that the negative pressure removes the residual resin 124 from the component 12. The pneumatic assembly 72 may also apply a positive pressure on the component 12 to produce a pushing force on the component 12. The positive pressure may release the residual resin 124 from the component 12. Additionally or alternatively, the cleaning assembly 126 may include a contact device (e.g., a brush) that is configured to contact the component 12. It will be appreciated that the cleaning assembly 126 may include any other feature that may be used to remove at least a portion of the residual resin 124 from the component 12.

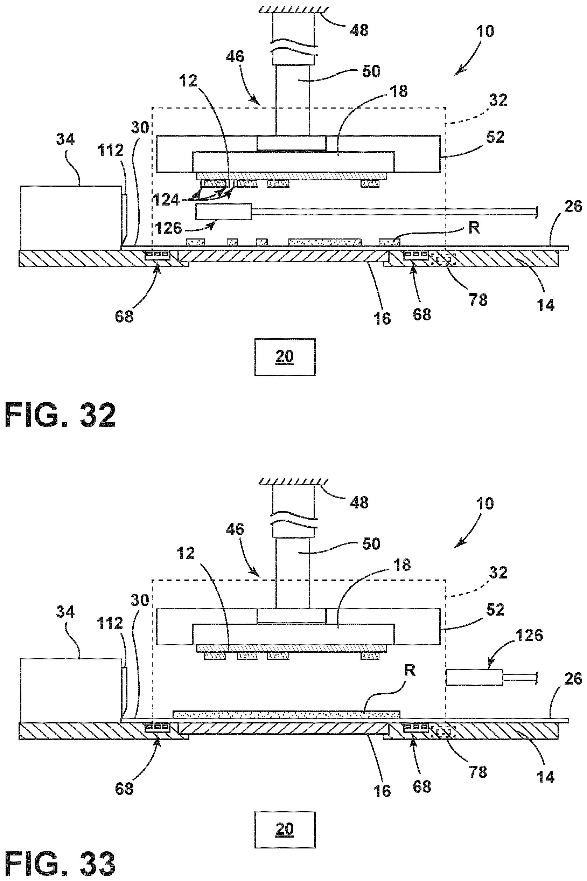

As shown in FIGS. 30 and 32, at step 704, the removal operation 700 can include moving the cleaning assembly 126 relative to the component 12. In some instances, the cleaning assembly 126 may be translated between the resin support 26 and the component 12 when the component 12 is in a raised position with the working surface of the component 12 and/or the stage 18 separated from any resin on the resin support 26 and/or the resin support 26 itself.

As shown in FIGS. 30 and 33, at step 706, the removal operation can include deactivating the cleaning assembly 126. With at least a portion of the residual resin 124 separated from the component 12, an additional layer of uncured first resin R and/or second resin R may be translated into the build zone 32 and an additional layer of the component 12 may be formed. Alternatively, with at least a portion of the residual resin 124 removed, the component 12 may be removed from the stage 18. Alternatively still, the removal operation 700 may be performed a second time to further remove any residual resin 124 remaining on the component 12. Alternatively still, additional removal operations may be performed to further remove any residual resin 124 remaining on the component 12.

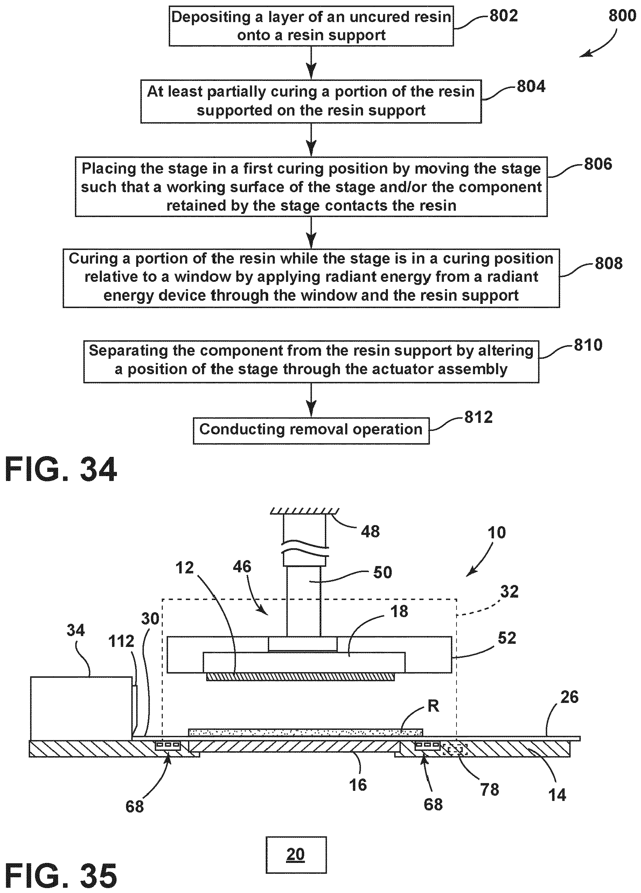

Referring now to FIGS. 34-39, a method 800 for operating an additive manufacturing apparatus 10 is provided in accordance with various aspects of the present disclosure. The various steps of method 800 are schematically illustrated in FIGS. 35-39. The method 200 can be used to operate the additive manufacturing apparatus 10 or any other suitable additive manufacturing apparatus. It should be appreciated that the example method 200 is discussed herein only to describe example aspects of the present subject matter and is not intended to be limiting. Any of the steps within FIG. 34 may be omitted without departing from the scope of the present disclosure.

In general, in some embodiments, a portion of the first resin R may be cured prior to forming a layer of the component 12 in order to reduce an amount of residual resin that may be present on the component 12 after the layer is formed. For example, as shown in FIGS. 34 and 35, the method 800 can include, at step 802, depositing a layer of an uncured first resin R onto a resin support 26. The additional layer of the uncured first resin R may be defined by the thickness assembly 112. While the first resin R is deposited onto the resin support 26 and/or after the deposition of the first resin R onto the resin support 26, the resin support 26 may be translated in an X-axis direction into a build zone 32.

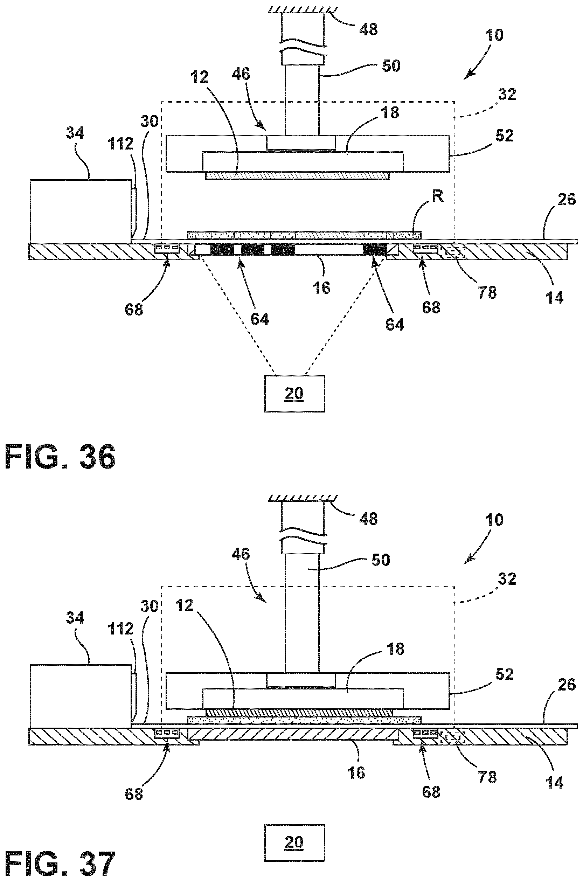

As shown in FIGS. 34 and 36, at step 804, the method 800 can include at least partially curing a first portion of the first resin R supported on the resin support 26. In a partially cured state, the first portion of the first resin R may be maintained in a gel-like state to further adhere the at least partially cured first portion of the first resin R to the resin support. In some instances, the first portion may generally correspond to a negative image 64 or inverse of a geometry of the to be formed layer (e.g., the layer to be formed in formed in step 808 in FIG. 34) of the component 12. In various embodiments, the first portion may additionally or alternatively be any other design in which at least a portion of the first resin R and/or second resin R is cured. Additionally, in some examples, the first portion may have a geometry that is similar to the to be formed layer but offset in size due to the shrinking to compensate for the first portion shrinking as the first resin R is at least partially cured.

As shown in FIGS. 34 and 37, at step 806, the method 800 can include placing the stage 18 in a curing position by moving the stage 18 such that the working surface of the component 12 retained by the stage 18 contacts the first resin R.

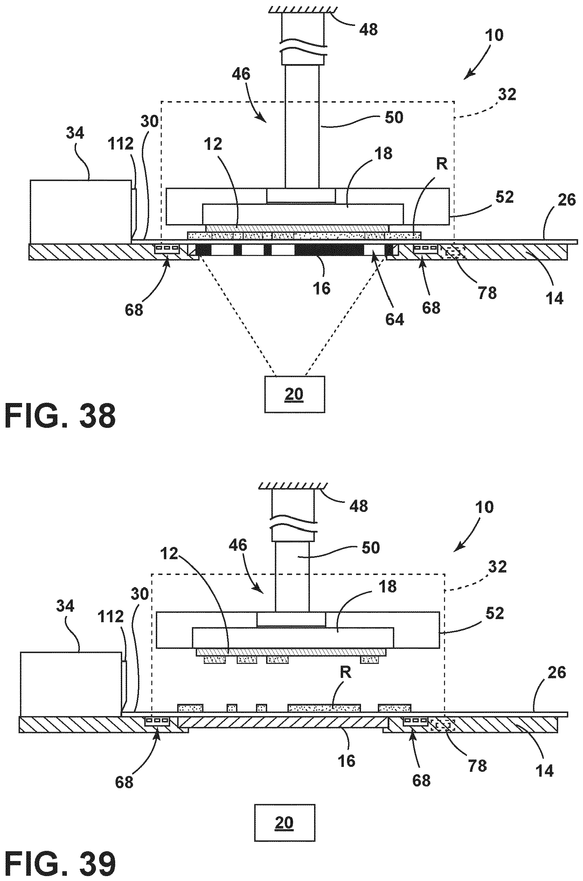

As shown in FIGS. 34 and 38, at step 808, the method 800 can include curing a second portion of the first resin R while the stage 18 is in the curing position relative to the window 16 by applying radiant energy from a radiant energy device 20 through the window 16 and the resin support 26. As provided herein, the radiant energy may be in the form of a patterned image 64 that is transmitted through at least a portion of the window 16. The second portion of the first resin R that is cured forms a layer of the component 12 that is retained by the stage 18.

As shown in FIGS. 34 and 39, at step 810, the method 800 can include separating the component 12 from the resin support 26 by altering a position of the stage 18 through the actuator assembly 46. In various examples, the first portion and the second portion of the first resin R may be cured to different points such that the second cured portion separates from the resin support 26 with the component 12 while the first cured portion remains on the resin support 26. As such, the residual resin attached to the component may be reduced due to the first portion of the first resin R being at least partially cured. However, in some instances, one or more removal operations 300, 400, 500, 600, 700 may be performed to further remove any residual resin that may be attached to the component 12. The residual resin may be removed through any one or more of the removal operations provided herein. In addition, it will be appreciated that the residual resin may be removed through any other removal operation without departing from the scope of the present disclosure.

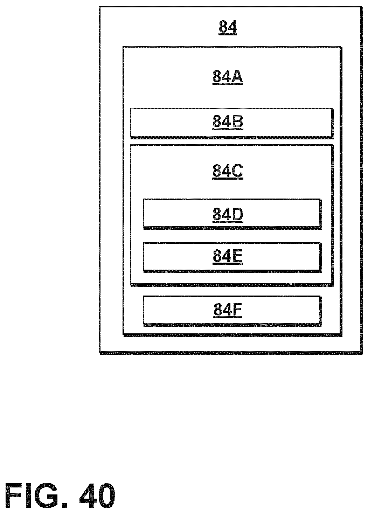

FIG. 40 depicts certain components of a computing system 84 according to example embodiments of the present disclosure. The computing system 84 can include one or more computing device(s) 84A which may be used to implement the methods 200 and processes such as described herein. The computing device(s) 84A can include one or more processor(s) 84B and one or more memory device(s) 84C. The one or more processor(s) 84B can include any suitable processing device, such as a microprocessor, microcontroller, integrated circuit, an application specific integrated circuit (ASIC), a digital signal processor (DSP), a field-programmable gate array (FPGA), logic device, one or more central processing units (CPUs), graphics processing units (GPUs) (e.g., dedicated to efficiently rendering images), processing units performing other specialized calculations, etc. The memory device(s) 84C can include one or more non-transitory computer-readable storage medium(s), such as RAM, ROM, EEPROM, EPROM, flash memory devices, magnetic disks, etc., and/or combinations thereof.

The memory device(s) 84C can include one or more computer-readable media and can store information accessible by the one or more processor(s) 84B, including instructions 84D that can be executed by the one or more processor(s) 84B. The instructions 84D may include one or more steps of the methods 200 and operations 300, 400, 500, 600, 700 described above, such as to execute operations at the additive manufacturing apparatus 10 described herein. The memory device(s) 84C can store instructions 84D for running one or more software applications, displaying a user interface, receiving user input, processing user input, etc. In some implementations, the instructions 84D can be executed by the one or more processor(s) 84B to cause the one or more processor(s) 84B to perform operations, e.g., such as one or more portions of the methods 200 and processes described herein. The instructions 84D can be software written in any suitable programming language or can be implemented in hardware. Additionally, and/or alternatively, the instructions 84D can be executed in logically and/or virtually separate threads on the processor(s) 84B.

The one or more memory device(s) 84C can also store data 84E that can be retrieved, manipulated, created, or stored by the one or more processor(s) 84B. The data 84E can include, for instance, data to facilitate the performance of the methods 200 and operations 300, 400, 500, 600, 700 described herein. The data 84E can be stored in one or more database(s). The one or more database(s) can be connected to computing system 84 by a high bandwidth LAN or WAN, or can also be connected to the computing system 84 through the network(s). The one or more database(s) can be split up so that they are located in multiple locales. In some implementations, the data 84E can be received from another device.

The computing device(s) 84A can also include a communication module or interface 84F used to communicate with one or more other component(s) of the computing system 84 or the additive manufacturing apparatus 10 over the network(s). The communication interface 84F can include any suitable components for interfacing with one or more network(s), including, for example, transmitters, receivers, ports, controllers, antennas, or other suitable components.

It should be appreciated that the additive manufacturing apparatus is described herein only for the purpose of explaining aspects of the present subject matter. In other example embodiments, the additive manufacturing apparatus may have any other suitable configuration and may use any other suitable additive manufacturing technology. Further, the additive manufacturing apparatus and processes or methods 200 and processes described herein may be used for forming components using any suitable material. For example, the material may be plastic, metal, concrete, ceramic, polymer, epoxy, photopolymer resin, or any other suitable material that may be embodied in a layer of slurry, resin, or any other suitable form of sheet material having any suitable consistency, viscosity, or material properties. For example, according to various embodiments of the present subject matter, the additively manufactured components described herein may be formed in part, in whole, or in some combination of materials including but not limited to pure metals, nickel alloys, chrome alloys, titanium, titanium alloys, magnesium, magnesium alloys, aluminum, aluminum alloys, iron, iron alloys, stainless steel, and nickel or cobalt based superalloys (e.g., those available under the name Inconel^{®} available from Special Metals Corporation). These materials are examples of materials suitable for use in the additive manufacturing processes described herein and may be generally referred to as "additive materials."

Further aspects are provided by the subject matter of the following clauses:

An additive manufacturing apparatus comprising: a resin support configured to support a resin; a support plate including a window; a stage configured to hold one or more cured layers of the resin to form a component, wherein each cured layer is formed with the stage in a respective cure position; a radiant energy device positioned on an opposite side of the resin support from the stage and operable to generate and project radiant energy in a patterned image through the window; and an actuator operably coupled with the stage and configured to move the stage in a Z-axis direction to place the stage in a removal position, wherein the component contacts one of the resin support or the resin supported by the resin support in the removal position.

The additive manufacturing apparatus of one or more of these clauses, wherein the stage is placed in the removal position during a removal operation, and wherein the removal operation is configured to remove at least a portion of residual resin coupled with the component.

The additive manufacturing apparatus of one or more of these clauses, wherein the removal position is offset from each of the cure positions in the Z-axis direction. The additive manufacturing apparatus of one or more of these clauses, further comprising: a vibration module operably coupled with the support plate, wherein the vibration module is activated when the stage is in the removal position.

The additive manufacturing apparatus of one or more of these clauses, further comprising: a material depositor configured to deposit the resin on the resin support, wherein the resin also forms the component.

The additive manufacturing apparatus of one or more of these clauses, further comprising: a material depositor configured to deposit the resin on the resin support, wherein the resin is a cleaning resin that is different from a component resin used to form the component.

The additive manufacturing apparatus of one or more of these clauses, further comprising: a material depositor configured to deposit the resin on the resin support, wherein a first resin is translated into a build zone to form one or more cured layers of the component and a second resin is translated into the build zone for a removal operation.

The additive manufacturing apparatus of one or more of these clauses, wherein the radiant energy device is configured to at least partially cure a portion of the resin on the resin support with the component separated from the resin.

The additive manufacturing apparatus of one or more of these clauses, wherein the radiant energy device is operable to generate and project radiant energy in a mirrored image through the window to at least partially cure the portion of the resin, wherein the mirrored image is an inverse of the patterned image.

A method of operating an additive manufacturing apparatus, the method comprising: depositing a first resin onto a resin support; translating the resin support in an X-axis direction; placing a stage in a first curing position such that a working surface contacts the first resin; curing a portion of the first resin while the stage is in the first curing position to form a layer of a component, the first resin at least partially coupled to the working surface; separating the component from the resin support by altering a position of the stage; and conducting a removal operation to separate a residual resin from the component, wherein the layer of the component contacts at least one of the resin support, the first resin, or a second resin with the stage is placed in a removal position.

The method of one or more of these clauses, wherein the resin support is free of resin during the removal operation.

The method of one or more of these clauses, wherein the first resin defines a first thickness and the second resin defines a second thickness, and wherein the second thickness is different than the first thickness.

The method of one or more of these clauses, further comprising: actuating a viscosity modification assembly during the removal operation.

The method of one or more of these clauses, wherein the removal operation further comprises: at least partially curing a portion of the second resin with the working surface of the component in the removal position.

The method of one or more of these clauses, further comprising: separating the component from the second resin with at least a portion of the resin being retained by the second resin on the resin support.

The method of one or more of these clauses, wherein the removal operation further comprises: at least partially curing a first portion of the second resin while the component is separated from the second resin.

The method of one or more of these clauses, further comprising: at least partially curing a second portion of the second resin while the stage is in the removal position.

An additive manufacturing apparatus comprising: a resin support configured to support a resin; a stage configured to hold one or more cured layers of the resin to form a component, wherein each cured layer is formed with the stage in a respective cure position; and a cleaning assembly positioned between the resin support and the stage in a Z-axis direction and configured to move in an X-axis direction to remove a residual resin from the component.

The additive manufacturing apparatus of one or more of these clauses, wherein the cleaning assembly includes a pneumatic assembly that is configured to generate at least one of a negative pressure or a positive pressure on the component.

The additive manufacturing apparatus of one or more of these clauses, wherein the cleaning assembly includes a contact device that is configured to contact the component during a removal operation.

This written description uses examples to disclose the present disclosure, including the best mode, and also to enable any person skilled in the art to practice the disclosure, including making and using any devices or systems and performing any incorporated methods and operations. The patentable scope of the disclosure is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

## Claims

1. An additive manufacturing apparatus comprising:
a resin support configured to support a resin;
a support plate including a window;
a stage configured to hold one or more cured layers of the resin to form a component, wherein each cured layer is formed with the stage in a respective cure position;
a radiant energy device positioned on an opposite side of the resin support from the stage and operable to generate and project radiant energy in a patterned image through the window; and
an actuator operably coupled with the stage and configured to move the stage in a Z-axis direction to place the stage in a removal position, wherein the component contacts one of the resin support or the resin supported by the resin support in the removal position.

2. The additive manufacturing apparatus of claim 1, wherein the stage is placed in the removal position during a removal operation, and wherein the removal operation is configured to remove at least a portion of residual resin coupled with the component.

3. The additive manufacturing apparatus of claim 1, wherein the removal position is offset from each of the cure positions in the Z-axis direction.

4. The additive manufacturing apparatus of claim 1, further comprising:
a vibration module operably coupled with the support plate, wherein the vibration module is activated when the stage is in the removal position.

5. The additive manufacturing apparatus of claim 1, further comprising:
a material depositor configured to deposit the resin on the resin support, wherein the resin also forms the component.

6. The additive manufacturing apparatus of claim 1, further comprising:
a material depositor configured to deposit the resin on the resin support, wherein the resin is a cleaning resin that is different from a component resin used to form the component.

7. The additive manufacturing apparatus of claim 1, further comprising:
a material depositor configured to deposit the resin on the resin support, wherein a first resin is translated into a build zone to form one or more cured layers of the component and a second resin is translated into the build zone for a removal operation.

8. The additive manufacturing apparatus of claim 1, wherein the radiant energy device is configured to at least partially cure a portion of the resin on the resin support with the component separated from the resin.

9. The additive manufacturing apparatus of claim 8, wherein the radiant energy device is operable to generate and project radiant energy in a mirrored image through the window to at least partially cure the portion of the resin, wherein the mirrored image is an inverse of the patterned image.

10. A method of operating an additive manufacturing apparatus, the method comprising:
depositing a first resin onto a resin support;
translating the resin support in an X-axis direction;
placing a stage in a first curing position such that a working surface contacts the first resin;
curing a portion of the first resin while the stage is in the first curing position to form a layer of a component, the first resin at least partially coupled to the working surface;
separating the component from the resin support by altering a position of the stage; and
conducting a removal operation to separate a residual resin from the component, wherein the layer of the component contacts at least one of the resin support, the first resin, or a second resin with the stage is placed in a removal position.

11. The method of claim 10, wherein the resin support is free of resin during the removal operation.

12. The method of claim 10, wherein the first resin defines a first thickness and the second resin defines a second thickness, and wherein the second thickness is different than the first thickness.

13. The method of claim 10, further comprising:
actuating a viscosity modification assembly during the removal operation.

14. The method of claim 10, wherein the removal operation further comprises:
at least partially curing a portion of the second resin with the working surface of the component in the removal position.

15. The method of claim 14, further comprising:
separating the component from the second resin with at least a portion of the resin being retained by the second resin on the resin support.
